(19) Europäisches Patentamt
European Patent Office
Office européen des brevets

(11) **EP 4 102 197 B1**

(12) **EUROPEAN PATENT SPECIFICATION**

(45) Date of publication and mention
of the grant of the patent:
**13.09.2023 Bulletin 2023/37**

(51) International Patent Classification (IPC):
***G01K 1/024*** *(2021.01)*

(52) Cooperative Patent Classification (CPC):
**G01K 1/024;** G01K 2207/06

(21) Application number: **22176047.3**

(22) Date of filing: **30.05.2022**

(54) **TEMPERATURE DETECTION SYSTEM**

TEMPERATURERFASSUNGSSYSTEM

SYSTÈME DE DÉTECTION DE TEMPÉRATURE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.05.2021 CN 202110603649
16.05.2022 CN 202221165280 U**

(43) Date of publication of application:
**14.12.2022 Bulletin 2022/50**

(73) Proprietor: **Shenzhen ChuangXinLian Electronics
Co., Ltd
Shenzhen City (CN)**

(72) Inventors:
• **Huang, Hong
Shenzhen City (CN)**
• **Peng, Bin
Chaling County (CN)**

(74) Representative: **Lin Chien, Mon-Yin
Gloria Fuertes 1, 2° D
28342 Valdemoro Madrid (ES)**

(56) References cited:
**US-A1- 2012 224 604     US-A1- 2018 340 842**

**Description**

BACKGROUND

1. Technical Field

The present disclosure generally relates to a technical field of temperature detection technology, and especially relates toa temperature detection system.

2. Description of Related Art

In the field of temperature detection, mature technology and high detection accuracy are occurred for temperature detection, product temperature detection and other fields.

However, there are higher requirements for temperature detection in a cooking process of an object to be measured, for example, conveniently detecting a temperature of the object to be measured. When cooking the object to be measured, a center temperature of the object to be measured is difficult to be detected in the industry, how to conveniently and quickly obtain the center temperature of the object to be measured, and update data in real time, so as to guide cooking is a technical problem to be solved. When a temperature detection needle is configured to detect a cooking temperature of the object to be measured, because the object to be measured that has been cooked is at a higher temperature, during inserting the temperature detection needle into the object to be measured that has been cooked, a temperature of the temperature detection needle will be increased by the higher temperature of the object to be measured and an ambient temperature that has been heated, so that circuit components inside the temperature detection needle are affected by the high temperature, thereby a deviation of an actual temperature that has been detected and inaccurate detection are occurred

In addition, after the temperature of the object to be measured that has been cooked is detected by the temperature detection needle, detection data needs to be sent to the outside of a cooking equipment wirelessly, a conventional cooking equipment mostly adopts a metal shell to send the detection data, which will affect stability of data transmission of the temperature detection needle; furthermore, when a RF module provided inside the temperature detection needle for transmitting wireless signals is affected by the high temperature, the wireless signals that have been transmitted will be unstable due to temperature drift.

Another example is accuracy of the temperature detection: different cooking temperatures for different ingredients are required during cooking the food, and critical temperatures are also different when cooking states are changed, in order to prevent taste of the food from being affected by the inaccuracy of the temperature detection. Also, requirements of low-power consumption are also important: how to achieve long-time standby work and in a sleep state during non-work so as to achieve energy saving is also a problem to be solved.

A first related document US 2012/224604 A1 discloses a device for detecting an internal temperature of a foodstuff, with at least one temperature sensor arranged in a first housing section, which can be inserted into the foodstuff, while a second housing section protrudes from the foodstuff, a voltage source, an electronic analyzing unit for checking at least one predetermined temperature condition, and a temperature indicator. For precise, especially continuous measuring of the internal temperature of the foodstuff during the preparation, the first housing section remains within the foodstuff, wherein at least the analyzing unit and the temperature indicator 8 are arranged in the first housing section, and the second housing section 10 is designed so that information shown on the temperature indicator can be perceived. A method of preparing a foodstuff with the device is also disclosed.

A second related document US 2018/340842 A1 discloses a food thermometer and a method of using thereof that provides an indication of an ambient temperature near food is received using an ambient temperature sensor of a food thermometer, and an indication of a food temperature at an interior portion of the food is received using one or more thermal sensors of the food thermometer. A rate at which the indication of the food temperature changes is determined, and the completion time is estimated based on at least the indication of the ambient temperature near the food and the rate at which the indication of the food temperature changes. In one aspect, a resting temperature rise is estimated based on the rate at which the indication of the food temperature changes and at least one of a food type, a thickness of the food, and an amount of time for the indication of the food temperature to increase by a temperature rise value during a period of cooking.

The present disclosure is configured to solve the technical problem of the temperature detection of the object to be measured.

SUMMARY

The technical problems to be solved: in view of the shortcomings of the related art, the present disclosure provides a temperature detection system which can solve the technical problems in the related art.

A temperature detection system according to an embodiment of the present disclosure includes:

a temperature detection needle with a long strip shape and an end being inserted into an object to be measured to detect a temperature of the object to be measured;

a temperature detection needle system received in the temperature detection needle;

the temperature detection needle including:

a main body being a configuration with a long strip shape, and including a hollow insertion end inserting into the object to be measured to detect the temperature of the object to be measured, and a tailing end exposed outside the object to be measured and insulated from the insertion end, the insertion end made of metal, the tailing end made of ceramic or polyether-ether-ketone (PEEK) material, and a metal contact point formed at an end of the tailing end;

a circuit control board received in the main body in a suspended manner through a metal elastic member to reduce an influence of heat performed on the circuit control board, and both ends of the circuit control board respectively arranged close to the insertion end and the tailing end;

the temperature detection needle system arranged on the circuit control board and configured to detect temperatures of at least two different parts of the temperature detection needle, and process detection results to obtain a final temperature value; and

the metal elastic member including: a first thimble with a metal structure installed on a side of the circuit control board close to the insertion end, and in contact with an inner wall of the insertion end to fix the circuit control board within the insertion end; a second thimble with a metal structure installed on the circuit control board and facing the tailing end, and in contact with the metal contact point; and wherein a first detection module is configured to detect a temperature of the object to be measured by inserting into the object to be measured, and output detection pulses, the first detection module arranged on the circuit control board and close to the first thimble for detecting a temperature of the first thimble; and a power management module is configured to supply power to the temperature detection needle system, the power management module arranged on the circuit control board and electrically connected with both the first thimble and the second thimble, so that the power management module is charged by taking both the first thimble and the second thimble as charging terminals; and wherein

the circuit control board includes a coaxial signal wire and a radio frequency (RF) module, one end of the coaxial signal wire in contact with the second thimble, and the other end of the coaxial signal wire connected with both the RF module and the power management module; and wherein

the coaxial signal wire is electrically connected with both the RF module and the power management module through an isolation magnetic bead; the RF module configured to transmit a wireless signal to the outside of the temperature detection needle through the coaxial signal wire, the second thimble and the metal contact point; the tailing end made of ceramic or PEEK material and configured to reduce the heat transmitted from the metal insertion end, and the second thimble configured to reduce the heat transmitted from the metal contact point, so as to prevent the coaxial signal wire and the RF module from being influenced by the temperature, to send stable wireless signals; and wherein

the first thimble includes: a first housing with an internal cavity thereof; a first needle and a second needle opposite to each other and installed in the internal cavity, so that the first needle and the second needle are limited in the internal cavity to prevent each of the first needle and the second needle from separating from the internal cavity; a first elastic member arranged between the first needle and the second needle, and configured to push the first needle and the second needle to move towards the outside of the first housing; the first housing passing through the circuit control board to be fixed, both the first needle and the second needle in contact with the inner wall of the insertion end to fix the circuit control board, so that the circuit control board is located in an inner center of the insertion end; and wherein

the first thimble is configured to transmit the heat on the insertion end so that the first detection module detects the temperature of the insertion end; and wherein

the second thimble includes: a second housing including a chamber arranged into the second housing, and an installation portion connected to the chamber; a third needle and a fourth needle opposite to each other and installed in the chamber, so that the third needle and the fourth needle are limited in the chamber to prevent each of the third needle and the fourth needle from separating from the chamber; the third needle including a first protrusion extending out of the second housing from the chamber, and in contact with the metal contact point; the fourth needle including a second protrusion deviated from the third needle and arranged from the chamber towards the installation portion and then extending into the installation portion; a second elastic member arranged between the third needle and the fourth needle, and configured to push the third needle and the fourth needle to move towards the outside of the second housing.

The present disclosure provides that the main body with a long strip-shape included in the temperature detection needle, one end of the main body is inserted into the object to be measured, and the other end is located outside the object to be measured; on the one hand, it can quickly obtain the heat on the main body through the metal elastic member, transmit the heat to the circuit control board, and perform temperature detection through the circuit control board. At the same time, the circuit control board is positioned in the main body in a suspended manner through the metal elastic member, which can effectively reduce the influence of excessive heat that has been performed on the circuit control board.

In addition, the temperature detection needle system of the present disclosure is configured to detect the temperature of at least two different parts of the temperature detection needle, and process the detection results to obtain the final temperature value.

BRIEF DESCRIPTION OF THE DRAWINGS

FIG. 1 is a schematic view of a temperature detection system in accordance with an embodiment of the present disclosure.

FIG. 2 is a schematic view of a temperature detection needle in accordance with an embodiment of the present disclosure.

FIG. 3 is similar to FIG. 2, but shown internal components thereof.

FIG. 4 is a side view of a mounting structure of a first thimble and a second thimble of the temperature detection needle of FIG. 2.

FIG. 5 is a schematic view of a mounting structure of the second thimble of FIG. 4.

FIG. 6 is a schematic structural view of a circuit control board within an insertion end of the temperature detection needle of FIG. 2.

FIG. 7 is a schematic view of the first thimble of the temperature detection needle of FIG. 4.

FIG. 8 is a schematic view of the second thimble of the temperature detection needle of FIG. 4.

FIG. 9 is a schematic view of the temperature detection needle placed in a corresponding charging device in accordance with an embodiment of the present disclosure.

FIG. 10 is an exploded, schematic view of the temperature detection needle and the charging device of FIG. 1.

FIG. 11 is a diagram view of a temperature detection needle system in accordance with an embodiment of the present disclosure.

FIG. 12 is a diagram view of a Bluetooth output module of the temperature detection needle system of FIG. 11.

FIG. 13 is a diagram view of a matching network structure of the Bluetooth output module of FIG. 12.

FIG. 14 is a direction detection diagram of a HF antenna using the matching network of FIG. 13.

FIG. 15 is a diagram view of the temperature detection needle system of FIG. 11.

FIG. 16 is a schematic diagram of a distribution network structure of the temperature detection needle system and an intelligent terminal in accordance with an embodiment of the present disclosure.

FIG. 17 is another schematic diagram of the distribution network structure of the temperature detection needle system and the intelligent terminal in accordance with an embodiment of the present disclosure.

FIG. 18 is a schematic diagram of a relay terminal in accordance with an embodiment of the present disclosure.

FIG. 19 is a circuit diagram of a Bluetooth chip and peripheral circuits in accordance with an embodiment of the present disclosure.

FIG. 20 is a circuit diagram of a charging circuit in accordance with an embodiment of the present disclosure.

The element labels according to the embodiment of the present disclosure shown as below:
A temperature detection system, D metal contact point, 100 temperature detection needle, 10 metal elastic member, 11 main body, 110 insertion end, 12 circuit control board, 120 tailing end, 121 first detection module, 122 power management circuit, 123 coaxial signal wire, 124 RF module, 125 isolation magnetic bead, 126 installation slot, 1261 first metal point, 127 second metal point, 128 second detection module, 13 first thimble, 130 first housing, 131 first needle, 132 second needle, 133 first elastic member, 1301 internal cavity, 14 second thimble, 140 second housing, 1401 chamber, 1402 installation portion, 141 third needle, 1411 first protrusion, 1421 second protrusion, 142 fourth needle, 143 second elastic member, 144 annular bevel, 15 HF antenna, 200 charging device, 21 charging chamber, 22 receiving room, 23 charging circuit, 24 charging interface, 25 indicating light, 26 charging contact, 261, 262 contact, 300 temperature detection needle system, 33 Bluetooth chip module, 331 Bluetooth output module, 3312 RF matching circuit, 333 one-time programmable (OTP) memory, 334 low-power management circuit, 35 charge and discharge protection circuit, 36 low dropout regulator, 400 intelligent terminal, 500 relay terminal, 51 Bluetooth receiving module, 52 relay Bluetooth module, 53 WiFi module, 54 distribution network module.

## DETAILED DESCRIPTION

The present disclosure is further described in detail in conjunction with embodiments and accompanying drawings below.

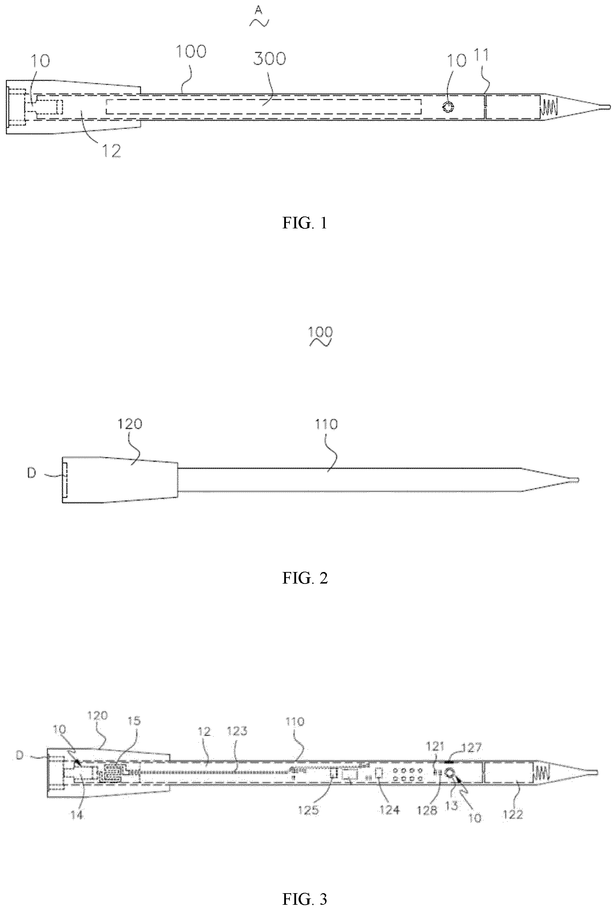

Referring to FIG. 1, a temperature detection system A according to an embodiment of the present disclosure includes: a temperature detection needle 100 and a temperature detection needle system 300 received in the temperature detection needle 100, the temperature detection needle 100 is a long strip shape with an end being inserted into an object to be measured to detect a temperature of the object to be measured.

The temperature detection needle 100 includes: a main body 11, a circuit control board 12 and a metal elastic member 10. The circuit control board 12 is positioned in the main body 11 in a suspended manner through the metal elastic member 10 to reduce an influence of heat performed on the circuit control board 12.

The temperature detection needle system 300 is arranged on the circuit control board 12 and configured to detect temperatures of at least two different parts of the temperature detection needle 100, and process detection results to obtain a final temperature value.

In the present disclosure, at least one detection portion is corresponding to the metal elastic member 10 for detecting heat on the metal elastic member 10, the heat on the metal elastic member 10 is generated from the main body 11.

In the present disclosure, the main body 11 with a long strip shape is included in the temperature detection needle 100, one end of the main body 11 is inserted into the object to be measured, and the other end is located outside the object to be measured; on the one hand, it can quickly obtain the heat on the main body 11 through the metal elastic member 10, transmit the heat to the circuit control board 12, and perform temperature detection through the circuit control board 12. At the same time, the circuit control board 12 is positioned in the main body 11 in a suspended manner through the metal elastic member 10, which can effectively reduce the influence of excessive heat that has been performed on the circuit control board 12, so as to ensure stability of transmission data and reduce detection errors.

In addition, the temperature detection needle system of the present disclosure is configured to detect the temperatures of at least two different parts of the temperature detection needle 100, and process the detection results to obtain the final temperature value.

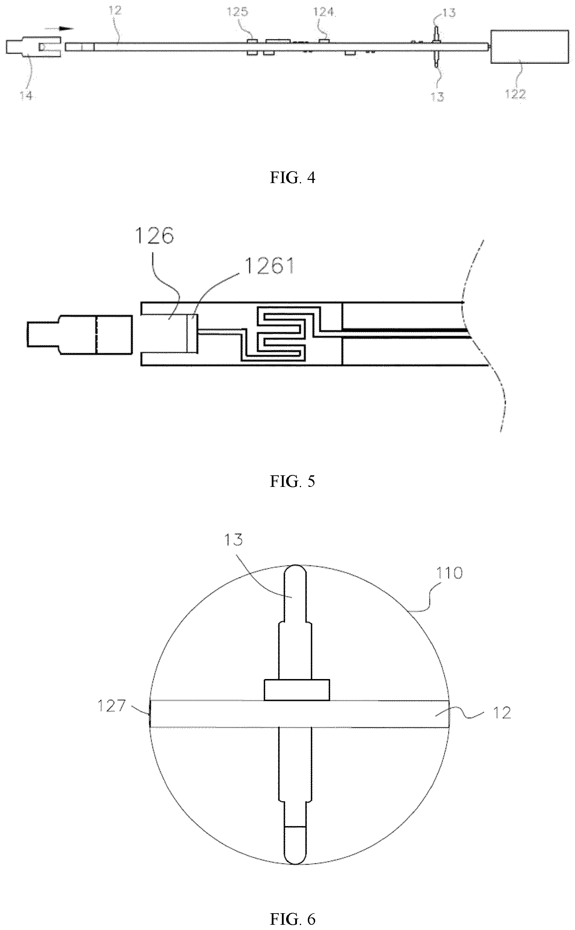

Referring to FIGS. 2-6, the main body 11 is a configuration with a long strip shape, and includes a hollow insertion end 110 inserted into the object to be measured to detect the temperature of the object to be measured, and a tailing end 120 exposed outside the object to be measured and insulated from the insertion end 110. The insertion end 110 is made of metal, the tailing end 120 is made of ceramic or polyether-ether-ketone (PEEK) material, and a metal contact point (D) is formed at an end of the tailing end 120.

The metal elastic member 10 includes a first thimble 13 and a second thimble 14.

The circuit control board 12 is received in the main body 11, and both ends of the circuit control board 12 are arranged close to the insertion end 110 and the tailing end 120, respectively. The first thimble 13 with a metal structure is installed on a side of the circuit control board 12 close to the insertion end 110, and in contact with an inner wall of the insertion end 110 to fix the circuit control board 12 within the insertion end 110. The second thimble 14 with a metal structure is installed on the circuit control board 12 to face the tailing end 120, and in contact with the metal contact point D. Both a first detection module 121 and a power management module 122 are arranged on the circuit control board 12, the first detection module 121 close to the first thimble 13 for detecting a temperature of the first thimble 13, the power management module 122 electrically connected with both the first thimble 13 and the second thimble 14, so that the power management module 122 is charged by taking both the first thimble 13 and the second thimble 14 as charging terminals.

The circuit control board 12 is arranged in the insertion end 110 and in contact with the inner wall of the insertion end 110 through the first thimble 13. On the one hand, the heat on the inner wall of the metal insertion end 110 can be obtained and then transmitted to the circuit control board 12, so that the temperature can be detected through the circuit control board 12; at the same time, the circuit control board 12 does not contact the insertion end 110 except where the circuit control board 12 passes through the first thimble 13 and the second thimble 14, which can effectively reduce the influence of the external temperature of the insertion end 110 on the circuit control board 12. In addition, the second thimble 14 is in contact with the metal contact point D of the tailing end 120, and then connected with the circuit control board 12. At this time, the circuit control board 12 contacts the metal contact point D only through the second thimble 14, which can greatly reduce the heat transmitted from the metal contact point D. By such arrangement, the circuit control board 12 is installed inside both the insertion end 110 and the tailing end 120 in a similar suspended manner, which can minimize the heat applied on the circuit control board 12, prevent the wireless signal that has been processed by the circuit control board 12 from being affected by the excessive external temperature, and improve the stability of the wireless signal.

In addition, the tailing end 120 is made of ceramic or PEEK material, the second thimble 14 with the function of transmitting the wireless signal is wrapped by the ceramic or PEEK material, so that the temperature generated on the second thimble 14 is greatly reduced, which can make an internal resistance of the second thimble 14 in a relatively stable state, so as to ensure the stability of circuit parameters of wireless signal transmission.

Furthermore, the insertion end 110 is made of metal and insulated from the tailing end 120, and the second thimble 14 is in contact with the metal contact point D, at this time, all the metal contact point D, the second thimble 14, the circuit control board 12, the first thimble 13 and the insertion end 110 are in a state of electrical connection. In this way, when a charging voltage is applied to the metal contact point D and the insertion end 110 of the temperature detection needle 100, the power management module 122 of the circuit control board 12 can be charged, that is, at this time, the first thimble 13 and the second thimble 14 are taken as positive and negative charging terminals of a circuit, so that the whole structural design is ingenious.

Furthermore, both the first thimble 13 and the second thimble 14 are elastic long needle-shaped structures. In this way, the long needle-shaped structure can reduce an area that the first thimble 13 contacts the insertion end 110, and an area that the second thimble 14 contacts the metal contact point D, to greatly reduce the heat transmitted from the first thimble 13 and the second thimble 14, so as to prevent a wide range of temperature changes applied on the circuit control board 12.

The circuit control board 12 includes a coaxial signal wire 123 and a radio frequency (RF) module 124, one end of the coaxial signal wire 123 in contact with the second thimble 14, and the other end of the coaxial signal wire 123 connected with both the RF module 124 and the power management module 122. The coaxial signal wire 123 is electrically connected with both the RF module 124 and the power management module 122 through an isolation magnetic bead 125.

The RF module 124 is configured to transmit the wireless signal to the outside of the temperature detection needle 100 through the coaxial signal wire 123, the second thimble 14 and the metal contact point D; the tailing end 120 made of ceramic or PEEK material and configured to reduce the heat transmitted from the metal insertion end 110, and the second thimble 14 configured to reduce the heat transmitted from the metal contact point D, so as to prevent the coaxial signal wire 123 and the RF module 124 from being influenced by the temperature, to send stable wireless signals.

The circuit control board 12 is also provided with a high frequency (HF) antenna 15. The RF module 124 transmits the wireless signal to the outside of the temperature detection needle 100 through the coaxial signal wire 123, the HF antenna 15, the second thimble 14 and the metal contact point D; the HF antenna 15 is directly connected with the coaxial signal wire 123. It can also be considered that the HF antenna 15 is taken as a part of the coaxial signal wire 123.

In an embodiment of the present disclosure, the coaxial signal wire 123 isolates the RF module 124 from the power management module 122 through the isolation magnetic bead 125. When the temperature detection needle 100 is in a charging state, a charging current enters the power management module 122 through the second thimble 14, the coaxial signal wire 123 and the isolation magnetic bead 125 to charge the temperature detection needle 100. When the temperature detection needle 100 is in a detection communication state, the RF module 124 transmits temperature data that has been detected to the coaxial signal wire 123 or the second thimble 14 or the HF antenna 15 through the isolation magnetic bead 125 in the form of wireless signals, and then sends to the outside in the form of radios. In an embodiment of the present disclosure, the HF antenna 15 can be used as both a charging line and an antenna for wireless signal transmission, and can ensure that the charging signal and the wireless signal that are on the RF module 124 and the power management module 122 are independent of each other. Such design is novel and the structure is simple, which is conducive to miniaturization of the circuit control board 12 and saves a cost thereof.

Furthermore, the first thimble 13 is configured to transmit the heat applied on the insertion end 110 so that the first detection module 121 can detect the temperature of the insertion end 110. The first thimble 13 is in contact with the insertion end 110 that is made of the metal material, and the insertion end 110 is inserted into the object to be measured. The first detection module 121 is configured to detect the temperature of the first thimble 13, which is equivalent to directly detect a temperature of a metal shell surrounding the insertion end 110, and the temperature detected by the first detection module 121 is equivalent to the temperature of the insertion end 110 surrounded by the metal shell, with a little change and accurate detection.

A second metal point 127 is arranged on a side of the circuit control board 12 for heat transmission, after the circuit control board 12 is installed on the insertion end 110, the second metal point 127 is in contact with the insertion end 110; the first detection module 121 configured to detect the temperature of the second metal point 127 and the first thimble 13.

In an embodiment of the present disclosure, the first thimble 13 is a needle-shaped structure, by providing the second metal point 127, the second metal point 127 is in direct contact with the inner wall of the insertion end 110, detection accuracy of the first detection module 121 can be ensured.

In a preferred embodiment of the present disclosure, the insertion end 110 is a cylindrical structure, and the first thimble 13 is arranged perpendicular to the circuit control board 12, both ends of the first thimble 13 are respectively in contact with two points of the inner wall of the insertion end 110 along upper and lower directions thereof. The second metal point 127 is arranged on the side of the circuit control board 12, a width of the circuit control board 12 is the same as a diameter of the insertion end 110, at this time, the second metal point 127 is also in contact with the insertion end 110, the temperature data obtained by the second metal point 127 comes from a third point of the insertion end 110 except the upper and lower points, at this time, temperatures in the above, the below, the left or the right can be detected, so as to prevent a large range of temperature changes at the up and down directions, while the temperature on the left or on the right is not detected, resulting in inaccurate detection.

Furthermore, a second detection module 128 is arranged on the circuit control board 12 and configured to detect an ambient temperature around the circuit control board 12, that is, a temperature of an air medium within the main body 11.

In an embodiment of the present disclosure, the first detection module 121 is configured to detect the temperature of a metal surface of the insertion end 110, and the second detection module 128 is configured to detect the ambient temperature around the circuit control board 12. The data detected by the first detection module 121 comes from contact heat transmission, while the data detected by the second detection module 128 comes from non-contact heat radiation. According to a temperature difference value and a change rate detected by the first detection module 121 and the second detection module 128, a current temperature change state of the object to be measured can be determined, so as to provide a more intelligent choice for specific temperature detection. For example, when the temperature difference detected by the first detection module 121 at a first time t1 and a second time t2 is x, and the temperature difference detected by the second detection module 128 at the first time t1 and the second time t2 is less than x, it can be considered that the object to be measured is currently in a rapid heating state, because at this time, the temperature change of the insertion end 110 changes rapidly, while the change of radiation temperature detection is relatively slow. Similarly, when the temperature change detected by the first detection module 121 and the temperature detected by the second detection module 128 have little or no difference in unit time, it can be considered that the object to be measured is in a heat preservation state. The present disclosure can determine the temperature change by setting a plurality of detection modules, and also opens up more application scenarios, such as making a cooking guidance according to the temperature change.

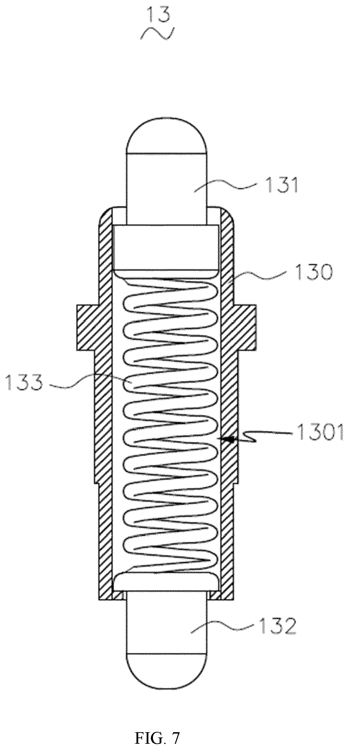

Referring to FIG. 7, in the present disclosure, the first thimble 13 includes a first housing 130, a first needle 131, a second needle 132 and a first elastic member 133.

The first housing 130 includes an internal cavity 1301 formed thereof, the first needle 131 and the second needle 132 opposite to each other and installed in the internal cavity 1301, so that the first needle 131 and the second needle 132 are limited in the internal cavity 1301 to prevent each of the first needle 131 and the second needle 132 from separating from the internal cavity 1301. The first elastic member 133 is arranged between the first needle 131 and the second needle 132, and configured to push the first needle 131 and the second needle 132 to move towards the outside of the first housing 130.

The first housing 130 passes through the circuit control board 12 to be fixed, and both the first needle 131 and the second needle 132 are in contact with the inner wall of the insertion end 110 to fix the circuit control board 12, so that the circuit control board 12 can be located in an inner center of the insertion end 110.

On the one hand, the first thimble 13 is configured to transmit the heat from the insertion end 110, on the other hand, the first thimble 13 also plays the role of fixing the circuit control board 12 to ensure that the circuit control board 12 is located in the internal center of the insertion end 110 in the suspended state, which can ensure the accuracy of temperature detection and reduce the temperature influence of the external insertion end 110 that are arranged on the circuit control board 12.

The first elastic member 133 is provided to ensure elasticity of the first needle 131 and the second needle 132 of the first thimble 13, and plays the purpose of fixing the circuit control board 12.

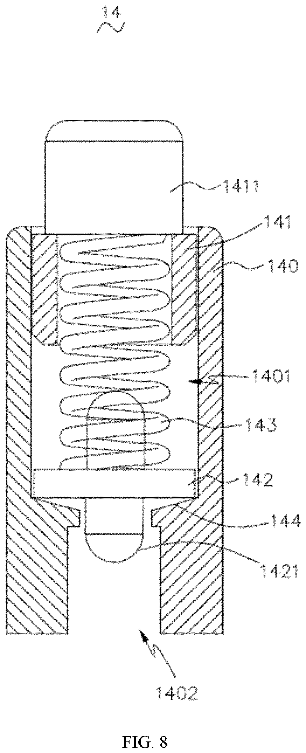

Referring to FIG. 8, in the present disclosure, the second thimble 14 includes a second housing 140, a third needle 141, a fourth needle 142 and a second elastic member 143.

The second housing 140 includes a chamber 1401 arranged into the second housing 140, and an installation portion 1402 connected to the chamber 1401. The third needle 141 and the fourth needle 142 are opposite to each other and installed in the chamber 1401, so that the third needle 141 and the fourth needle 142 are limited in the chamber 1401 to prevent each of the third needle 141 and the fourth needle 142 from separating from the chamber 1401. The third needle 141 includes a first protrusion 1411 extending out of the second housing 140 from the chamber 1401, and in contact with the metal contact point D; the fourth needle 142 includes a second protrusion 1421 deviated from the third needle 141 and arranged from the chamber 1401 towards the installation portion 1402 and then extending into the installation portion 1402. The second elastic member 143 is arranged between the third needle 141 and the fourth needle 142, and configured to push the third needle 141 and the fourth needle 142 to move towards the outside of the second housing 140.

Furthermore, referring to FIGS. 3-5 and FIG. 8, the circuit control board 12 includes an installation slot 126 formed at a portion of the tailing end 120 and fixed with the installation portion 1402, a bare first metal point 1261 arranged on the installation slot 126 and in contact with the second protrusion 1421, and further connected to the coaxial signal wire 123.

In an embodiment of the present disclosure, the second thimble 14 is fixed in the installation slot 126 through the installation portion 1402, and the second protrusion 1421 in contact with the first metal point 1261 presses on the first contact point, which can ensure the stability of the circuit, reduce a contact area between the circuit control board 12 and the second thimble 14, and reduce the influence of the temperature on the circuit control board 12.

In an embodiment of the present disclosure, the second elastic member 143 pushes the third needle 141 to the metal contact point D so that the first protrusion 1411 is in contact with the metal contact point D, in this way, the area that the first protrusion 1411 is in contact with the metal contact point D is small, which can reduce the temperature influence from the metal contact point D as much as possible. At the same time, when the insertion end 110 and the tailing end 120 are installed, a pushing effect of the second elastic member 143 applied on the first protrusion 1411 can be reversely applied on the circuit control board 12, so that the circuit control board 12 abuts against the metal contact point D and the insertion end 110, so as to prevent the circuit control board 12 from being shaking.

Furthermore, a size of the installation portion 1402 is smaller than that of the chamber 1401, an annular bevel 144 arranged between the chamber 1401 and the installation portion 1402 and configured to prevent the fourth needle 142 from moving away from the second housing 140.

In an embodiment of the present disclosure, the annular bevel 144 can stop the fourth needle 142, so that the fourth needle 142 that has been pushed must contact the annular bevel 144, so as to ensure the continuity of the circuit and realize charging and wireless signal transmission.

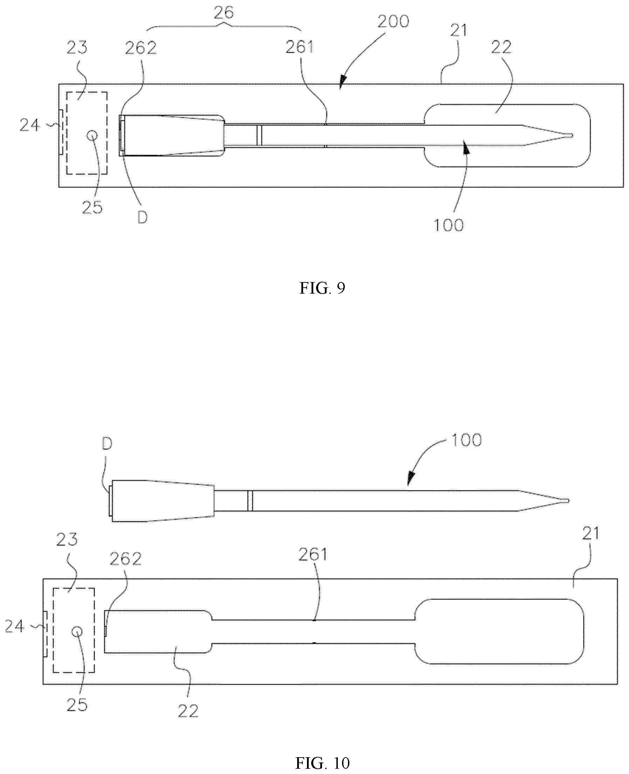

Referring to FIGS. 1-4 and FIGS. 9-10, the temperature detection needle 100 of the present disclosure can be matched with a charging device 200 for realizing charging temperature detection needle 100. The charging device 200 includes: a charging chamber 21, a receiving room 22 and a charging circuit 23. The receiving room 22 is arranged in the charging chamber 21 for receiving the temperature detection needle 100 therein, and two groups of charging contacts 26, one group of charging contacts 26 include a pair of contacts, respectively named as contacts 261. The pair of contacts 261 is arranged close to a side of the insertion end 110 and arranged on two inner sides of the receiving room 22 along a length direction thereof and facing the insertion end 110. On the one hand, the pair of contacts 261 is configured to fix the temperature detection needle 100 to prevent the temperature detection needle 100 from shaking in the charging device 200, on the other hand, the pair of contacts 261 is in contact with a metal outer wall of the insertion end 110, and electrically connected with the circuit control board 12 through the insertion end 110 and the first thimble 13. The other group of charging contacts 261 is only one, which is named as a contact 262 arranged at the end of the receiving room 22 towards the tailing end 120 and located on the inner wall of the receiving room 22. When the temperature detection needle 100 is placed in the charging device 200, the metal contact point D of the tailing end 120 is in contact with the contact 262 and abuts against the contact 262, and the contact 262 is electrically connected with the circuit control board 12 through the metal contact point D and the second thimble 14. When the contact 261 and the contact 262 are in contact with the temperature detection needle 100, respectively, the contact 261 and the contact 262 are taken as positive and negative poles of the charging terminal to charge the power management module 122 that is arranged on the circuit control board 12 through the first thimble 13 and the second thimble 14. The charging circuit 23 is received in the charging chamber 21, the contact 261 and the contact 262 are electrically connected with the charging circuit 23, respectively, and the charging circuit 23 is configured to charge the power management module 122 through a conductive charging wire.

The charging device 200 and the temperature detection needle 100 of the present disclosure are used in combination. Specifically, the temperature detection needle 100 placed in the charging device 200 is charged or standby when the temperature detection needle 100 is not used, while, the temperature detection needle 100 can be removed from the charging device 200 and then be inserted into the object to be measured to detect the temperature of the object to be measured when needing to use the temperature detection needle 100, which can ensure sufficient power of the temperature detection needle 100 to the maximum extent.

Furthermore, the charging circuit 23 includes a charging interface 24 arranged at an end of the charging chamber 21, and an indicating light 25 located on a surface of the charging chamber 21 for indicating a charging state of the temperature detection needle 100.

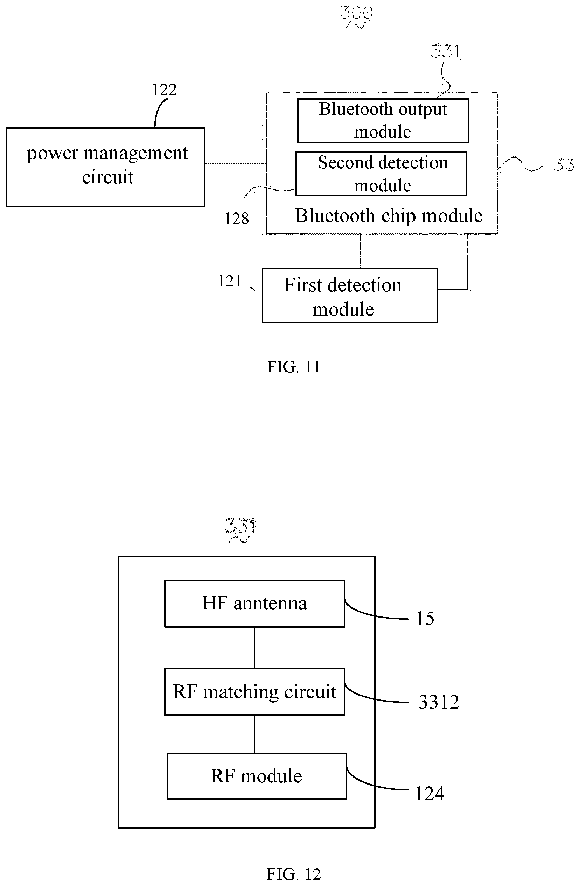

Referring to FIG. 11 and FIG. 12, the temperature detection system 300 includes: the power management circuit 122, the first detection module 121 and a Bluetooth chip module 33. The power management circuit 122 is configured to supply power to the temperature detection system 300 and access an external power supply through the charging contact 26 to realize charging, such as accessing the charging device 200; the first detection module 121 is configured to detect a temperature of the object to be measured by inserting into the object to be measured, and output detection pulses; the Bluetooth chip module 33 is electrically connected to the power management circuit 122 and the first detection module 121, and configured to receive the detection pulses transmitted from the first detection module 121 and calculate number of the detection pulses per unit time according to the detection pulses, so as to prepare for detecting the final temperature value, and convert the detected final temperature value into Bluetooth signals and then output the Bluetooth signals. The first detection module 121 is a pulse temperature sensor.

In an embodiment of the present disclosure, the Bluetooth chip module 33 includes: a Bluetooth output module 331, the second detection module 128 and an one-time programmable memory 333. The second detection module 128 is a negative temperature coefficient thermistor (NTC).

The Bluetooth output module 331 is configured to convert the detected final temperature value into the Bluetooth radio frequency (RF) signals and then output the Bluetooth radio frequency (RF) signals. The second detection module 128 is configured to detect an ambient temperature of the object to be measured to obtain an intermediate temperature value so that the Bluetooth chip module 33 is configured to determine the detected final temperature value, according to the intermediate temperature and the number of the detection pulses per unit time.

The one-time programmable memory 333 is configured to store software programs in the Bluetooth chip module 33, and the Bluetooth chip module 33 configured to determine the final temperature value according to the intermediate temperature value and the number of the detection pulses per unit time by performing the software programs.

In the present disclosure, the second detection module 128 is configured to detect the ambient temperature of the object to be measured to obtain the intermediate temperature value; at the same time, the first detection module 121 additionally arranged on the periphery of the Bluetooth chip module 33 is configured to detect the temperature of the object to be measured so as to obtain a first temperature value, and then, the Bluetooth chip module 33 is configured to process the intermediate temperature value and the first temperature value to obtain the final temperature value, according to a calculation method recorded in the software programs, which can ensure detection redundancy and improve detection accuracy, by two temperature detections to calculate the final temperature value.

Specifically, the final temperature value is obtained through the followings:

A, calculating the first temperature value through formula (1-1) according to the number of the detection pulses per unit time sent from the first detection module 121;

$$\text{Temp}=\text{Num}*0.0625°C-50.0625°C; \quad (1\text{-}1)$$

wherein, Num represents the number of the detection pulses, Temp represents the first temperature value;

B, comparing the first temperature value with the intermediate temperature value, to take a larger one from the first temperature value and the intermediate temperature value as the final temperature value.

In an embodiment of the present disclosure, constants 0.0625 and 50.0625 are the best constants verified by experiments, which can achieve high precision temperature detection within a commonly cooking temperature range of -50° to 150°, detection accuracy can be as follows

-20 °C~85°C (within ± 0.5°C);

-50°C~-20°C (within ± 0.75°C);

85°C~150°C (within ± 0.75°C);

In an embodiment of the present disclosure, the temperature detection system 300 is simpler, more digital and more accurate, which can achieve high-precision measurement without system calibration or hardware or software compensation.

In the present disclosure, the Bluetooth chip module 33 can obtain the final detection temperature value, only the first detection module 121 outputs the detection pulses according to the first temperature value. The detection pulse is a kind of signal wave controlled by a voltage, which has nothing to do with a current, in this way, the detection pulse with a minimal current can be set through a peripheral circuit, so that the first detection module 121 can work under a low-current state. According to a heat formula of square positive correlation between a power and a current, heat can be reduced as much as possible to prepare for low-power consumption of the whole product.

In another embodiment of the present disclosure, a correction formula can also be used to segment compensate the detection temperature value so as to achieve higher precision temperature detection.

Specifically, the final temperature value is calculated by the following correction process:

calculating a second temperature value through formula (2-1) according to the number of the detection pulses per unit time sent from the first detection module 121;

$$T=Temp+(Temp-30)*0.005, Temp<30°C;$$

$$T=Temp, 30°C \leq Temp < 100°C;$$

$$T=Temp +(100-Temp)*0.012, 100°C \leq Temp < 150°C; (2-1)$$

wherein, T represents the second temperature value, Temp represents the first temperature value; and comparing the second temperature value with the intermediate temperature value, to take a larger one from the second temperature value and the intermediate temperature value as the final temperature value.

When the correction formula is used for performing subsection compensation calculation, a function segment corresponding to the first temperature value is determined according to the calculated first temperature value Temp, the second temperature value T can be calculated by using different correction formula functions, according to different function segments, and then the second temperature value T is compared with the intermediate temperature value, so as to take the larger one from the second temperature value T and the intermediate temperature value, as the final temperature value.

Referring to FIGS. 1-4 and FIGS. 12-13, the Bluetooth output module 331 includes: the RF module 124, the HF antenna 15 and a RF matching circuit 3312.

In the present disclosure, the HF antenna 15 of the Bluetooth output module 331 is arranged on the tailing end 120, and configured to send the high frequency signal, and then convert the high frequency signal into the Bluetooth RF signal for external transmission. The high frequency signal works under a high power condition, which will lead to a high temperature of the insertion end 110. All of the power management circuit 122, the second detection module 128 and the first detection module 121 are arranged close to the tailing end 120 so that a distance between the Bluetooth chip module 33 and the HF antenna 15 is too large. In order to avoid a high frequency signal interference and heat caused by increased circuits, the circuit control board 12 is designed by a four-layer configuration and provides the coaxial signal wire 123, therefore, 50 ohm impedance is used for signal transmission to reduce circuit instability caused by artificially matching electronic elements.

More specifically, electrical signals processed by the power management circuit 122, the second detection module 128 and the first detection module 121arranged on the circuit control board 12close to the tailing end 120 are all low frequency signals, and the signals transmitted by the HF antenna 15 are high frequency signals. The power management circuit 122, the second detection module 128, the first detection module 121, and the Bluetooth output module 331 are set at opposite ends of the circuit control board 12, so that mutual interference between low frequency signals and high frequency signals can be reduced. On the other hand, it can also distinguish the high frequency signals with high power and high heat from the low frequency signals, so as to prevent the heat generated by the high frequency signals from influencing working performances of the power management circuit 122, the second detection module 128 and the first detection module 121. And then, the coaxial signal wire 123 is provided to transmit two kinds of signals, namely, the charging signals and the Bluetooth RF signals, which can set as few circuits as possible on the basis of solving interference and temperature problems, reduce circuits heating and power consumption. When the temperature detection needle 100 is received in the charging device 200, the coaxial signal wire 123 only transmits the charging signal; while, when the temperature detection needle 100 is removed from the charging device 200 to detect the temperature of the object to be measured, the coaxial signal wire 123 only transmits the Bluetooth RF signal, which also can save the cost.

The RF module 124 is configured to transmit a temperature value signal conforming to a Bluetooth communication protocol according to the final temperature value, the RF matching circuit 3312 is electrically connected between the RF module 124 and the HF antenna 15, and configured to perform up-conversion on the temperature value signal of the RF module 124, and then send the up-conversion temperature value signal to the HF antenna 15. The HF antenna 15 is configured to convert the temperature value signal transmitted from the RF matching circuit 3312 into the Bluetooth radio frequency signal with good stability and directivity, and then send out the Bluetooth radio frequency signal in a radio form.

A circuit structure of the RF matching circuit 3312 is shown in FIG. 12. In a preferred embodiment of the present disclosure, component parameters E1~E4 in FIG. 12 are set as shown in Table 1-1 below:

Table 1-1 Component parameter selection table

| Component | Parameter value |
|-----------|-----------------|
| E1 | 0.5pF |
| E2 | 2NH |
| E3 | 1.5pF |
| E4 | 0 ohm |

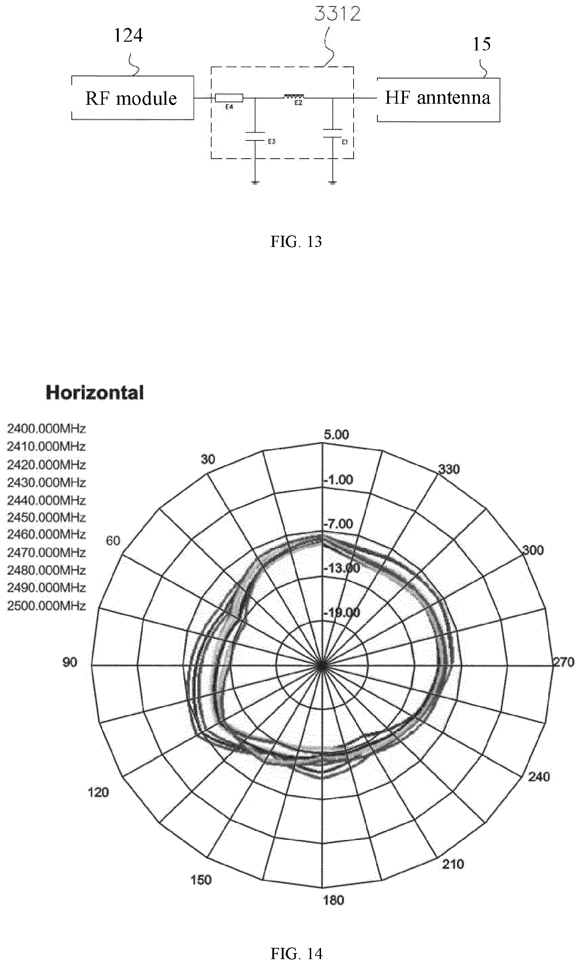

In the case of setting the above parameters, Bluetooth transmission efficiency and transmission directivity of the wireless signal of the HF antenna 15 in the present disclosure are tested, which is as shown in table 2-1 and FIG. 13.

Table 2-1 Bluetooth transmission efficiency test table

| Normal temperature 25°C | | Simulated environment temperature 120°C | |
|-------------------------|--------------------------|-----------------------------------------|--------------------------|
| frequency (Mhz) | transmission efficiency (%) | frequency (Mhz) | transmission efficiency (%) |
| 2400 | 42.3 | 2400 | 43.5 |
| 2410 | 42.5 | 2410 | 43.6 |
| 2420 | 42.8 | 2420 | 43.7 |
| 2430 | 43.2 | 2430 | 43.5 |
| 2440 | 43.3 | 2440 | 43.4 |
| 2450 | 43.3 | 2450 | 42.8 |
| 2460 | 43.4 | 2460 | 42.6 |
| 2470 | 43.6 | 2470 | 42.2 |
| 2480 | 43.6 | 2480 | 42.1 |
| 2490 | 43.5 | 2490 | 41.8 |
| 2500 | 43.6 | 2500 | 41.6 |

It can be seen from Table 2-1 that, at a normal temperature, the transmission efficiency of the Bluetooth signal with a frequency of 2.4GHz can be increased slightly with an increase of frequencies, and can reach a maximum transmission efficiency of 43.6%, which can meet requirements of Bluetooth communication. In the case of simulating for food heating (120°C), test results are shown in the right column of Table 2-1. In this case, with the increase of frequencies, the transmission efficiencies gradually decrease, but can obtain a transmission efficiency of 41.6% at the lowest point, which fully meets the minimum efficiency requirement of the Bluetooth signal transmission. Therefore, the structure and parameter settings of the RF matching circuit 3312 can fully meet the requirements of the temperature detection needle 100 that works under a high temperature condition, so as to overcome the problem of a low transmission efficiency of the Bluetooth communication under the high temperature condition in the prior art.

It can be seen from Table 2-1 that, when the temperature is 25°C, the transmission efficiency of the Bluetooth RF signal is between 42.3% and 43.6%; when the temperature is 120°C, the transmission efficiency of the Bluetooth RF signal is between 41.6% and 43.5%. In general, with the increase of temperatures, an output power of the Bluetooth RF signal decreases, which also verifies from another point: 1) the power management circuit 122, the second detection module 128 and the first detection module 121 arranged on the circuit control board 12 close to the insertion end 110 are remotely isolated from the Bluetooth output module 331 arranged on the circuit control board 12 close to the tailing end 120 through the coaxial signal wire 123, which can prevent the influence of heat generated by the high frequency signal with high power on the temperature change of the tailing end 120.

Referring to FIG. 14, when the Bluetooth signal has excellent directivity during being transmitted under a frequency of 2.4GHz, and the transmission efficiency in all directions is basically in a balanced state, which can overcome the problem that the temperature detection needle 100 can't be connected because the Bluetooth transmission signal is lost.

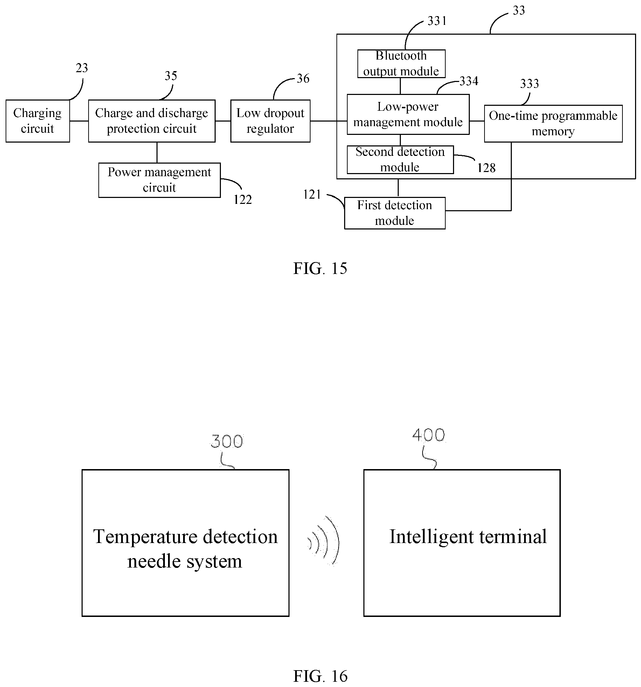

Referring to FIG. 15, the temperature detection system 300 further includes: a charge and discharge protection circuit 35 and a low dropout regulator 36, the charging circuit 23, and the Bluetooth chip module 33 including a low-power management circuit 334.

Furthermore, the charging circuit 23 is electrically connected with the power management circuit 122 and configured to charge the power management circuit 122. The low dropout regulator 36 is electrically connected between the power management circuit 122 and the Bluetooth chip module 33, and configured to stabilize electrical parameters of the power management circuit 122 and supply power to the Bluetooth chip module 33 and the first detection module 121.

The low-power management circuit 334 is electrically connected to the low dropout regulator 36, so that the low dropout regulator 36 can supply power to the Bluetooth chip module 33 through the low-power management circuit 334. The low-power management module 334 is configured to control the power management circuit 122 to supply power to the Bluetooth chip module 33, and intelligently control the Bluetooth chip module 33 to stand-by and wake-up, so as to save energy thereof.

Specifically, the low-power management module 334 is adopted a buck-boost circuit, and the low dropout regulator 36 transmits power to the low-power management module 334, and then supplies power to the Bluetooth chip module 33 by buck the buck-boost circuit.

A specific working process is as follows:

a first working state: when the low dropout regulator 36 works, that is, the temperature detection needle 100 is removed from the charging device 200 and the power management circuit 122 works, the low dropout regulator 36 is configured to charge an inductance of the buck-boost circuit, discharge a capacitor of the buck-boost circuit, supply power to the Bluetooth chip module 33 by using discharge power of the capacitor, and store electric energy in advance by the capacitor of the buck-boost circuit;

a second working state: when the temperature detection needle 100 is on standby, that is, when the power management circuit 122 and the low dropout regulator 36 do not work, the inductor that has been charged with electric energy discharges and supplies power to the capacitor and the Bluetooth chip module 33;

at the end of standby of the temperature detection needle 100, when the power management circuit 122 and the low dropout regulator 36 start to work, the capacitor is returned to discharge for supplying power to the Bluetooth chip module 33, thereby two working states can be switched to each other.

Furthermore, the power stored in the inductor of the buck-boost circuit is much greater than that stored in the capacitor of the buck-boost circuit, so that enough standby time in a standby state can be ensured.

In an embodiment of the present disclosure, the low-power management module 334 can work in two different working states, so that the power management circuit 122 supplies power to the Bluetooth chip module 33 is indirectly controlled.

The charge and discharge protection circuit 35 is electrically connected to both the charging circuit 23 and the power management circuit 122, and the low dropout regulator 36 is electrically connected between the charge and discharge protection circuit 35 and the Bluetooth chip module 33. The charge and discharge protection module 35 is configured to intelligently manage a charging process of the power management circuit 122 by the charging circuit 23 and indicate a charging state of the power management circuit 122.

When the charging circuit 23 works and the power management circuit 122 is charged, the power management circuit 122 does not supply power to the low dropout regulator 36, at this time, the power management circuit 122 is in a non-working state relative to the Bluetooth chip module 33, the low dropout regulator 36 also does not work, and the buck-boost circuit of the low-power management module 334 works in the first working state. At this time, the charge and discharge protection module 35 receives electric energy of the charge circuit 23 and detects electric quantity of the power management circuit 122. When the power management circuit 122 has less power, the charge and discharge protection module 35 outputs a large current to charge the power management circuit 122; while, when the power management circuit 122 has a large amount of power and a low charging voltage, the charge and discharge protection module 35 outputs a small current to charge the power management circuit 122. In this way, the power management circuit 122 can be quickly charged, and a temperature of the power management circuit 122 in the charging process can be protected in a reasonable range.

When the charging circuit23 does not work and the power management circuit 122 starts to work, the power management circuit 122 discharges to the charge and discharge protection module 35, the charge and discharge protection module 35 regulates a discharge current of the power management circuit 122, and outputs the discharge energy to the low dropout regulator 36. And then, the charge and discharge protection module 35 further regulates a voltage and sends the voltage to the buck-boost circuit of the low-power management module 334 for supplying power to the Bluetooth chip module 33. At this time, the buck-boost circuit works in the second working state.

The power management circuit 122 is controlled to be charged by the charge and discharge protection module 35, so that the power management circuit 122 can be safely charged, and the current can be stably supplied when the power management circuit 122supplies power to the low dropout regulator 36.

Referring to FIG. 16, in the present disclosure, the temperature detection system 300 is further electrically connected to an intelligent terminal 400. The intelligent terminal 400 is communicated with the Bluetooth chip module 33 to receive the final temperature value detected by the Bluetooth chip module 33.

In the present disclosure, during cooking, the temperature detection needle 100 is inserted into the food, and the temperature of the food can be checked in real time through the intelligent terminal 400 so as to provide a cooking guidance.

In another embodiment of the present disclosure, cooking schemes are set in the intelligent terminal 400, and an appropriate cooking scheme can be selected by detecting data such as a temperature and a temperature change rate, so as to realize real-time reminders and obtain better cooking feeling.

In an embodiment of the present disclosure, the Bluetooth chip module 33 adopts DA14531 series of Bluetooth chips produced by US Dialog Company.

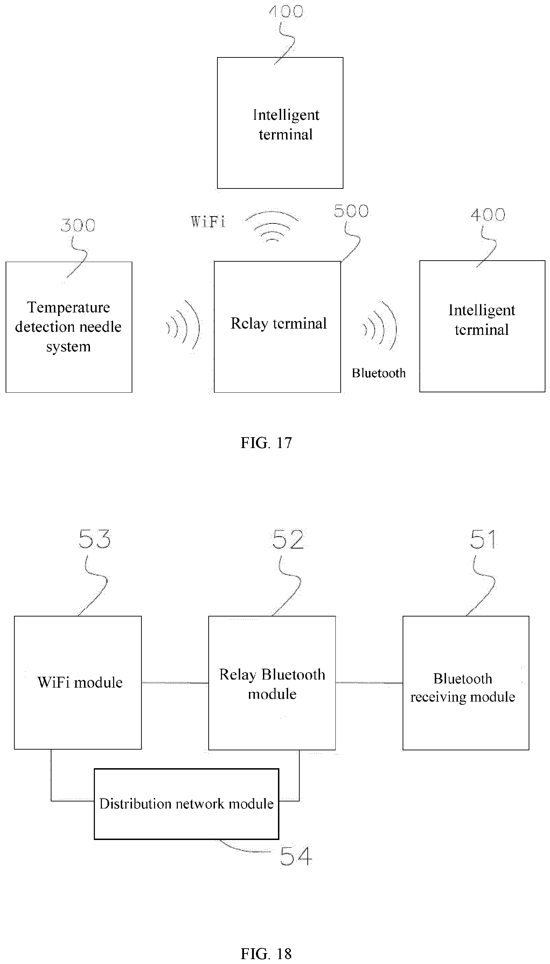

Referring to FIG. 17, in an embodiment of the present disclosure, the temperature detection system 300 is further electrically connected to a relay terminal 500 that is configured to receive the final temperature value detected by the Bluetooth chip module 33, convert the final temperature value into a Bluetooth signal or a WiFi signal and then send the Bluetooth signal or the WiFi signal to the intelligent terminal 400.

Referring to FIG. 17, furthermore, the relay terminal 500 further includes: a Bluetooth receiving module 51, a relay Bluetooth module 52, a WiFi module 53 and a distribution network module 54.

The Bluetooth receiving module 51 is configured to receive the Bluetooth signal corresponding to the final temperature value that has been detected by the Bluetooth chip module 33, and then forward the Bluetooth signal. The relay Bluetooth module 52 is in communication connection with the Bluetooth receiving module 51 and configured to receive the Bluetooth signal sent by the Bluetooth receiving module 51, and then convert the Bluetooth signal into an enhanced Bluetooth signal to send out the enhanced Bluetooth signal. The WiFi module 53 is in communication connection with the Bluetooth receiving module 51 and configured to receive the Bluetooth signal sent by the Bluetooth receiving module 51, and then convert the Bluetooth signal into an enhanced WiFi signal to send out the enhanced WiFi signal. The distribution network module 54 is in communication connection with both the relay Bluetooth module 52 and the WiFi module 53, and configured to determine that a signal sent by the relay terminal 500 is the enhanced Bluetooth signal sent by the relay Bluetooth module 52 or the enhanced WiFi signal sent by the WiFi module 53, according to the software programs or a manual trigger mode, to obtain a communication between the relay terminal 500 and the intelligent terminal 400.

At present, a communication distance of the temperature detection needle 100 in the market is short and has always occupied a foremost position of all adverse complaints. The relay terminal 500 of our company is provided to amplify and relay the Bluetooth signal sent by the temperature detection needle 100 as much as possible, so as to overcome the technical problem that a distance of signal transmission is short which is caused by shielding interference. In addition, Bluetooth communication or WiFi communication can be selected for different usage scenarios, so that the usage scenarios of the temperature detection needle 100 are greatly widen and provides favorable conditions for remote intelligent detection and control.

When the temperature detection needle 100 of the present disclosure is used in an electromagnetic oven, a barbecue oven and other equipments with a whole metal shell, the temperature detection needle 100 can implement signal communication through the relay terminal 500 to avoid the communication signal from being shielded by the metal shell.

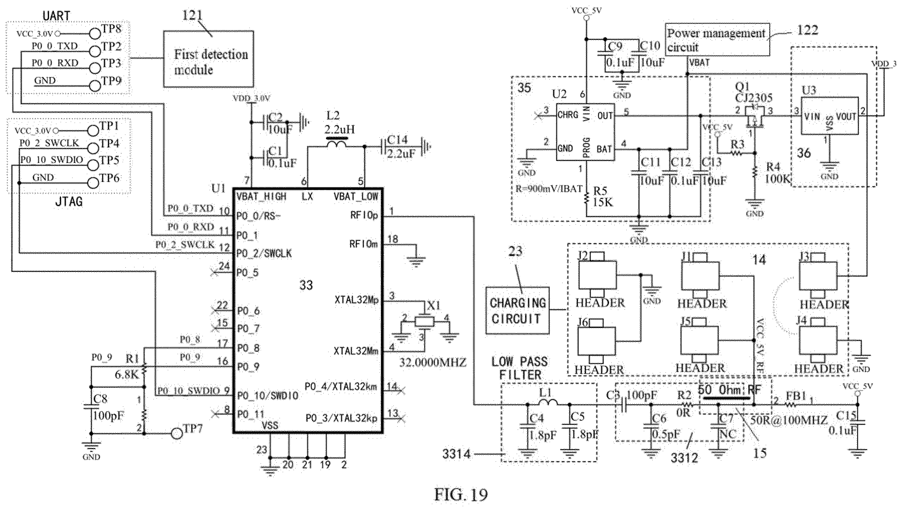

Referring to FIG. 19, a circuit diagram of a peripheral circuit of the Bluetooth chip module 33 is shown.

A working process of the peripheral circuit is as follows:

the first detection module 121 sends the pulse corresponding to the temperature of the detected object to be measured to the Bluetooth chip module 33 through an UART interface, at the same time, the second detection module 128 also detects the ambient temperature to obtain the first temperature value Temp calculated by the formula (1-1) above mentioned or the second temperature value T calculated by the formula (2-1) above mentioned, and then, the Bluetooth chip module 33 calculates the final temperature value according to internal software programs and then sends the final temperature value to the outside by using the RF module 124 (received in a DA14531 chip), and a RFIOp terminal passing through a low-pass filter 3314, the RF matching circuit 3312 and the HF antenna 15 in turn. The RFIOp terminal is connected with the Bluetooth output module 331 of the Bluetooth chip module 33, and signals sent through the RFIOp terminal is the Bluetooth signals up-converted by the Bluetooth output module 331 and conforms to a Bluetooth communication protocol.

Referring to FIG. 19 and FIG. 3, the charging circuit 23 is placed in the charging device 200, and connected with the temperature detection needle 100 through the charging interface 24, and the charging interface 24 is connected to the HF antenna 15 to provide power for the HF antenna 15. At the same time, the charging interface 24 is also connected to both the charge and discharge protection circuit 35 and the low dropout regulator 36. Without needing to provide an external power supply to the temperature detection needle 100, the power management circuit 122 generates a voltage of VDD_3V through the low dropout regulator 36 to supply the voltage of VDD_3V to a VBAT_HIGH pin of the Bluetooth chip module 33, so as to provide a working voltage for the Bluetooth chip module 33, and the VBAT_HIGH pin of the Bluetooth chip module 33 is connected with the low-power management circuit 334 inside the Bluetooth chip module 33.

JTAG terminals connected with pins9, 12 are respectively connected with the one-time programmable (OTP) memory 333, and the software programs are written when the temperature detection needle 100 is manufactured and delivered, so that the Bluetooth chip module 33 can be configured to be self operation and calculate the final temperature value according to the software programs.

An element FB1 shown in FIG. 19 is the isolation magnetic bead 125, the isolation magnetic bead 125 isolates the HF antenna 15 that is arranged on the left of the isolation magnetic bead 125, from all of an input voltage VCC_5V of the power management circuit 122, the charging interface 24, and the charging circuit 23 that are arranged on the right of the isolation magnetic bead 125, which can reduce the power consumption of the temperature detection needle 100 by sharing the coaxial signal wire 123 to isolate transmission signals therebetween.

As shown in FIG. 19, a CMOS tube (model: CJ2305) of a level control switch Q1 is configured to detect a charging status and a discharging status of the charge and discharge protection module 35 to automatically switch the low dropout regulator 36, so that the temperature detection needle 100 can be reset rather than needing any switches. Once the power management circuit 122 is completely charged, the temperature detection needle 100 is removed from the charging device 200, the level control switch Q1 is turned on, and the low dropout regulator 36 starts to work so as to provide power for the Bluetooth chip module 33, that is, the low dropout regulator 36 supplies power to the VBAT_HIGH pin to start the temperature detection system 300.

It can be seen from FIG. 19, that the software programs stored in the one-time programmable (OTP) memory 333 is also configured to troubleshoot and quick restart of the Bluetooth chip module 33.

Furthermore, the troubleshoot refers that the Bluetooth chip module 33 fails to work normally, such as: no Bluetooth signals, no Bluetooth connections, no temperature values detected, abnormal temperature detections and other unknown abnormal conditions for unknown reasons. The temperature detection needle 100 is placed in the charging device 200 to be charged, and then the temperature detection needle 100 is removed from the charging device 200 to detect a temperature of the objected to be measured by inserting into the object, the power management circuit 122 supplies power to the charge and discharge protection circuit 35, and the charge and discharge protection circuit 35 outputs a control signal to the level control switch Q1, and the level control switch Q1 is on. The low-power management circuit 334 works in the first working state via the buck-boost circuit therein. After that, the Bluetooth chip module 33 automatically starts to work under the drive of the low dropout regulator 36, the software programs run in the Bluetooth chip module 33 again, and the Bluetooth chip module 33 will restart and calculate the final temperature value without manual maintenance and repair.

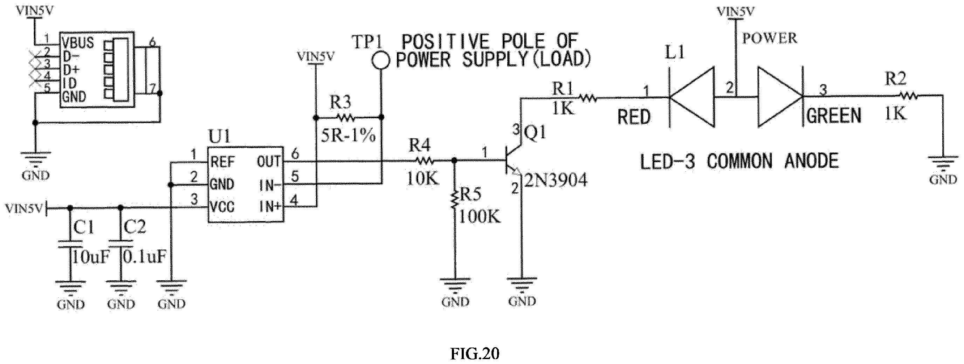

Referring to FIG. 20, a circuit diagram of the charging circuit 23 of the charging device 200 is provided. As shown in FIG. 20, a chip U1 can obtain electric signals of 100 times voltage of VIN+ and VIN-, by using a voltage amplifier with 100 times precision to amplify a voltage of an output terminal OUT, an output current of the output terminal OUT is 3MA, at this time, a voltage of 0.015v is obtained by a resistance R3, and then the voltage of 0.015v is amplified 100 times to obtain a voltage of 1.5V, so that a triode Q1 (model: 2N3904) is on. A red light of a diode L1 with a common anode is on, which indicates that the temperature detection needle 100 is in a charging state. When the resistor R3 is fully charged, the current is 0.0002MA, the voltage is 0.1V, the triode Q1 is in a cut-off state, and the red light of the diode L1 with the common anode is off, which indicates that the temperature detection needle 100 is in a charging complete state. The charging electric energy is connected to the metal contact D of the temperature detection needle 100 through an interface TP1 to charge the temperature detection needle 100.

**Claims**

1. A temperature detection system (A), comprising:

a temperature detection needle (100) with a long strip shape and an end configured to be inserted into an object to be measured to detect a temperature of the object to be measured;
a temperature detection needle system (300) received in the temperature detection needle;
the temperature detection needle (100) comprising:

a main body (11) being a configuration with a long strip shape, and comprising a hollow insertion end (110) configured to be inserted into the object to be measured to detect the temperature of the object to be measured, and a tailing end (120) configured to be exposed outside the object to be measured and insulated from the insertion end (110), the insertion end (110) made of metal, the tailing end (120) made of ceramic or polyether-ether-ketone (PEEK) material, and a metal contact point (D) formed at an end of the tailing end (120);
a circuit control board (12) received in the main body in a suspended manner through a metal elastic member (10) to reduce an influence of heat performed on the circuit control board (12), and both ends of the circuit control board (12) respectively arranged close to the insertion end (110) and the tailing end (120);
the temperature detection needle system (300) arranged on the circuit control board (12) and configured to detect temperatures of at least two different parts of the temperature detection needle (100), and process detection results to obtain a final temperature value; and the metal elastic member (10) comprising:

a first thimble (13) with a metal structure installed on a side of the circuit control board (12) close to the insertion end (110), and in contact with an inner wall of the insertion end (110) to fix the circuit control board (12) within the insertion end (110);
a second thimble (14) with a metal structure installed on the circuit control board (12) and facing the tailing end (120), and in contact with the metal contact point (D); and wherein
a first detection module (121) is configured to detect a temperature of the object to be measured by inserting into the object to be measured, and output detection pulses, the first detection module (121) arranged on the circuit control board (12) and close to the first thimble (13) for detecting a temperature of the first thimble (13); and a power management module (122) is configured to supply power to the temperature detection needle system (300), the power management module (122) arranged on the circuit control board (12) and electrically connected with both the first thimble (13) and the second thimble (14), so that the power management module (122) is charged by taking both the first thimble (13) and the second thimble (14) as charging terminals; and wherein
the circuit control board (12) comprises a coaxial signal wire (123) and a radio frequency (RF) module (124), one end of the coaxial signal wire (123) in contact with the second thimble (14), and the other end of the coaxial signal wire (123) connected with both the RF module (124) and the power management module (122); and wherein
the coaxial signal wire (123) is electrically connected with both the RF module (124) and the power management module (122) through an isolation magnetic bead (125); the RF module (124) configured to transmit a wireless signal to the outside of the temperature detection needle (100) through the coaxial signal wire (123), the second thimble (14) and the metal contact point (D); the tailing end (120) made of ceramic or PEEK material and configured to reduce the heat transmitted from the metal insertion end (110), and the second thimble (14) configured to reduce the heat transmitted from the metal contact point (D), so as to prevent the coaxial signal wire (123) and the RF module (124) from being influenced by the temperature, to send stable wireless signals; and wherein
the first thimble (13) comprises:

a first housing (130) with an internal cavity (1301) thereof;
a first needle (131) and a second needle (132) opposite to each other and installed in the internal cavity (1301), so that the first needle (131) and the second needle (132) are limited in the internal cavity (1301) to prevent each of the first needle (131) and the second needle (132) from separating from the internal cavity (1301);

a first elastic member (133) arranged between the first needle (131) and the second needle (132), and configured to push the first needle (131) and the second needle (132) to move towards the outside of the first housing (130);
the first housing (130) passing through the circuit control board (12) to be fixed, both the first needle (131) and the second needle (132) in contact with the inner wall of the insertion end (110) to fix the circuit control board (12), so that the circuit control board (12) is located in an inner center of the insertion end (110); and wherein
the first thimble (131) is configured to transmit the heat on the insertion end (110) so that the first detection module (121) detects the temperature of the insertion end (110); and wherein
the second thimble (14) comprises:

a second housing (140) comprising a chamber (1401) arranged into the second housing (140), and an installation portion (1402) connected to the chamber (1401);
a third needle (141) and a fourth needle (142) opposite to each other and installed in the chamber (1401), so that the third needle (141) and the fourth needle (142) are limited in the chamber (1401) to prevent each of the third needle (141) and the fourth needle (142) from separating from the chamber (1401);
the third needle (141) comprising a first protrusion (1411) extending out of the second housing (140) from the chamber (1401), and in contact with the metal contact point (D); the fourth needle (142) comprising a second protrusion (1421) deviated from the third needle (141) and arranged from the chamber (1401) towards the installation portion (1402) and then extending into the installation portion (1402);
a second elastic member (143) arranged between the third needle (141) and the fourth needle (142), and configured to push the third needle (141) and the fourth needle (142) to move towards the outside of the second housing (140).

2. The temperature detection system (A) as claimed in claim 1, wherein the temperature detection needle system (300) comprises:
a Bluetooth chip module (33) electrically connected to an external power supply and the first detection module (121), and configured to receive the detection pulses transmitted from the first detection module (121) and calculate number of the detection pulses per unit time, the Bluetooth chip module (33)

a second detection module (128) configured to detect an ambient temperature of the object to be measured to obtain an intermediate temperature value;
an one-time programmable (OTP) memory (333) configured to store software programs in the Bluetooth chip module (33), and the Bluetooth chip module (33) configured to determine a final temperature value according to the intermediate temperature value and the number of detection pulses per unit time by performing the software programs;
a Bluetooth output module (331) configured to convert the detected final temperature value into Bluetooth radio frequency (RF) signals and then output the Bluetooth radio frequency signals; and wherein the final temperature value is obtained through the followings:

calculating a first temperature value through formula (1-1) according to the number of the detection pulses per unit time sent from the pulse temperature sensor;

$$Temp=Num*0.0625°C-50.0625°C; (1-1)$$

wherein, Num represents the number of the detection pulses, Temp represents the first temperature value; and
comparing the first temperature value with the intermediate temperature value, to take a larger one from the first temperature value and the intermediate temperature value as the final temperature value.

3. The temperature detection system (A) as claimed in claim 2, wherein the Bluetooth output module (331) comprises:

a radio frequency (RF) module (124) configured to transmit a temperature value signal conforming to a Bluetooth communication protocol according to the final temperature value;
a high frequency (HF) antenna (15); and

a radio frequency (RF) matching circuit (3312) electrically connected between the RF module (124) and the HF antenna (15), and configured to perform up-conversion on the temperature value signal of the RF module (124), and then send the up-conversion temperature value signal to the HF antenna (15);

the HF antenna (15) configured to convert the temperature value signal transmitted from the RF matching circuit (3312) into a Bluetooth radio frequency signal with good stability and directivity, and then send out the Bluetooth radio frequency signal in a radio form.

4. The temperature detection system (A) as claimed in claim 3, wherein the final temperature value is calculated by the following correction process:

calculating a second temperature value through formula (2-1) according to the number of the detection pulses per unit time sent from the pulse temperature sensor;

$$T=Temp+(Temp-30)*0.005, Temp<30°C;$$

$$T=Temp, 30°C\leq Temp<100°C;$$

$$T=Temp +(100-Temp)*0.012, 100°C\leq Temp<150°C; (2-1)$$

wherein, T represents the second temperature value, Temp represents the first temperature value; and comparing the second temperature value with the intermediate temperature value, to take a larger one from the second temperature value and the intermediate temperature value as the final temperature value.

5. The temperature detection system (A) as claimed in claim 2, wherein the temperature detection needle system (300) is further configured to be electrically connected to an intelligent terminal (400), the intelligent terminal (400) being configured to communicate with the Bluetooth chip module (33) to receive the final temperature value detected by the Bluetooth chip module (33).

6. The temperature detection system (A) as claimed in claim 5, wherein the temperature detection needle system (300) is further configured to be electrically connected to a relay terminal (500) that is configured to receive the final temperature value detected by the Bluetooth chip module (33), convert the final temperature value into a Bluetooth signal or a WiFi signal and then send the Bluetooth signal or the WiFi signal to the intelligent terminal (400).

7. The temperature detection system as claimed in claim 6, wherein the relay terminal (500) to which the temperature detection needle system (300) is configured to be electrically connected further comprises:

a Bluetooth receiving module (51) configured to receive the Bluetooth signal corresponding to the final temperature value that has been detected by the Bluetooth chip module (33), and then forward the Bluetooth signal;
a relay Bluetooth module (52) in communication connection with the Bluetooth receiving module (51) and configured to receive the Bluetooth signal sent by the Bluetooth receiving module (51), and then convert the Bluetooth signal into an enhanced Bluetooth signal to send out the enhanced Bluetooth signal;
a WiFi module (53) in communication connection with the Bluetooth receiving module (51) and configured to receive the Bluetooth signal sent by the Bluetooth receiving module (51), and then convert the Bluetooth signal into an enhanced WiFi signal to send out the enhanced WiFi signal;
a distribution network module (54) in communication connection with both the relay Bluetooth module (52) and the WiFi module (53), and configured to determine that a signal sent by the relay terminal (500) is the enhanced Bluetooth signal sent by the relay Bluetooth module (52) or the enhanced WiFi signal sent by the WiFi module (53), according to the software programs or a manual trigger mode, to obtain a communication between the relay terminal (500) and the intelligent terminal (400).

8. The temperature detection system (A) as claimed in claim 1, wherein the circuit control board (12) comprises an installation slot (126) formed at a portion of the tailing end (120) and fixed with the installation portion (1402), a bare first metal point (1261) arranged on the installation slot (126) and in contact with the second protrusion (1421), and further connected to the coaxial signal wire (123).

9. The temperature detection system (A) as claimed in claim 8, wherein a size of the installation portion (1402) is smaller than that of the chamber (1401), an annular bevel (144) arranged between the chamber (1401) and the installation portion (1402) and configured to prevent the fourth needle (142) from moving away from the second housing (140).

10. The temperature detection system (A) as claimed in claim 9, wherein a second metal point (127) is arranged on a side of the circuit control board (12) for heat transmission, after the circuit control board (12) is installed on the insertion end (110), the second metal point (127) is in contact with the insertion end (110); the first detection module (121) configured to detect the temperature of the second metal point (127) and the first thimble (13); a second detection module (128) arranged on the circuit control board (12) and configured to detect an ambient temperature around the circuit control board (12).

**Patentansprüche**

1. Temperaturerfassungssystem (A), umfassend:

eine Nadel zur Temperaturerfassung (100), die eine Form eines langen Streifens und ein Ende aufweist, das so konfiguriert ist, dass es in ein zu messendes Objekt eingeführt wird, um eine Temperatur des zu messenden Objekts zu erfassen;
eine Nadelsystem zur Temperaturerfassung (300), das in der Nadel zur Temperaturerfassung (100) aufgenommen ist;
wobei die Nadel zur Temperaturerfassung (100) umfasst:

einen Hauptkörper (11), der eine Konfiguration mit einer Form eines langen Streifens darstellt und ein hohles Einführende (110), ein Schwanzende (120) und eine an einem Ende des Schwanzendes (120) angeordnete metallische Kontaktstelle (D) umfasst, wobei das Einführende (110) so konfiguriert ist, dass es in das zu messende Objekt eingeführt wird, um die Temperatur des zu messenden Objekts zu erfassen, wobei das Schwanzende (120) so konfiguriert ist, dass es außerhalb des zu messenden Objekts freiliegt und vom Einführende (110) isoliert ist, wobei das Einführende (110) aus einem Metall besteht und das Schwanzende (120) aus einer Keramik oder einem Polyetheretherketon (PEEK) besteht;
eine Steuerleiterplatte (12), die durch ein elastisches Metallelement (10) aufgehängt im Hauptkörper (11) aufgenommen ist, um einen Einfluss von Wärme auf die Steuerleiterplatte (12) zu reduzieren, und deren beide Enden nahe dem Einführende (110) bzw. dem Schwanzende (120) angeordnet sind;
wobei das Nadelsystem zur Temperaturerfassung (300) auf der Steuerleiterplatte (12) angeordnet ist und so konfiguriert ist, dass es Temperaturen von mindestens zwei verschiedenen Teilen der Nadel zur Temperaturerfassung (100) erfasst und Erfassungsergebnisse verarbeitet, um einen endgültigen Temperaturwert zu erhalten; und
wobei das elastische Metallelement (10) umfasst:

eine erste Hülse (13) mit einer Metallstruktur, die auf einer nahe dem Einführende (110) liegenden Seite der Steuerleiterplatte (12) installiert ist und in Kontakt mit einer Innenwand des Einführendes (110) steht, um die Steuerleiterplatte (12) innerhalb des Einführendes (110) zu befestigen;
eine zweite Hülse (14) mit einer Metallstruktur, die auf der Steuerleiterplatte (12) installiert ist, dem Schwanzende (120) zugewandt ist und in Kontakt mit der metallischen Kontaktstelle (D) steht; und wobei ein erstes Erfassungsmodul (121) so konfiguriert ist, dass es eine Temperatur des zu messenden Objekts durch Einführen in das zu messende Objekt erfasst und Erfassungsimpulse ausgibt, wobei das erste Erfassungsmodul (121) auf der Steuerleiterplatte (12) und nahe der ersten Hülse (13) angeordnet ist, um eine Temperatur der ersten Hülse (13) zu erfassen; und wobei ein Energieverwaltungsmodul (122) so konfiguriert ist, dass es das Nadelsystem zur Temperaturerfassung (300) mit Energie versorgt, wobei das Energieverwaltungsmodul (122) auf der Steuerleiterplatte (12) angeordnet ist und elektrisch mit der ersten Hülse (13) sowie der zweiten Hülse (14) verbunden ist, so dass das Energieverwaltungsmodul (122) aufgeladen wird, indem sowohl die erste Hülse (13) als auch die zweite Hülse (14) als Ladeanschlüsse verwendet werden; und wobei
die Steuerleiterplatte (12) eine koaxiale Signalleitung (123) und ein Radiofrequenzmodul (RF-Modul) (124) umfasst, wobei ein Ende der koaxialen Signalleitung (123) in Kontakt mit der zweiten Hülse (14) steht und das andere Ende der koaxialen Signalleitung (123) mit dem RF-Modul (124) und dem Energieverwaltungsmodul (122) verbunden ist; und wobei

die koaxiale Signalleitung (123) über eine isolierende Magnetperle (125) elektrisch mit dem RF-Modul (124) und dem Energieverwaltungsmodul (122) verbunden ist; wobei das RF-Modul (124) so konfiguriert ist, dass es über die koaxiale Signalleitung (123), die zweite Hülse (14) und die metallische Kontaktstelle (D) ein drahtloses Signal an die Außenseite der Nadel zur Temperaturerfassung (100) überträgt; wobei das Schwanzende (120) aus einer Keramik oder einem PEEK-Material besteht und so konfiguriert ist, dass es die vom metallischen Einführende (110) übertragene Wärme reduziert, und wobei die zweite Hülse (14) so konfiguriert ist, dass sie die von der metallischen Kontaktstelle (D) übertragene Wärme reduziert, um einen Einfluss der Temperatur auf die koaxiale Signalleitung (123) und das RF-Modul (124) zu verhindern, damit stabile drahtlose Signale gesendet werden; und wobei die erste Hülse (13) umfasst:

ein erstes Gehäuse (130) mit einem inneren Hohlraum (1301);
eine erste Nadel (131) und eine zweite Nadel (132), die einander gegenüberliegen und im inneren Hohlraum (1301) installiert sind, so dass die erste Nadel (131) und die zweite Nadel (132) im inneren Hohlraum (1301) begrenzt sind, um zu verhindern, dass sich jede der ersten Nadel (131) und der zweiten Nadel (132) aus dem inneren Hohlraum (1301) löst;
ein erstes elastisches Element (133), das zwischen der ersten Nadel (131) und der zweiten Nadel (132) angeordnet ist und so konfiguriert ist, dass es die erste Nadel (131) und die zweite Nadel (132) so drückt, um sie zur Außenseite des ersten Gehäuses (130) hin zu bewegen;
wobei das erste Gehäuse (130) durch die Steuerleiterplatte (12) geführt ist, um befestigt zu verwenden, wobei sowohl die erste Nadel (131) als auch die zweite Nadel (132) in Kontakt mit der Innenwand des Einführendes (110) stehen, um die Steuerleiterplatte (12) zu befestigen, so dass die Steuerleiterplatte (12) in einer inneren Mitte des Einführendes (110) angeordnet ist; und wobei die erste Hülse (13) so konfiguriert ist, dass sie die Wärme auf das Einführende (110) überträgt, so dass das erste Erfassungsmodul (121) die Temperatur des Einführendes (110) erfasst; und wobei
die zweite Hülse (14) umfasst:

ein zweites Gehäuse (140), das eine im zweiten Gehäuse (140) angeordnete Kammer (1401) und einen mit der Kammer (1401) verbundenen Installationsabschnitt (1402) umfasst;
eine dritte Nadel (141) und eine vierte Nadel (142), die einander gegenüberliegen und in der Kammer (1401) installiert sind, so dass die dritte Nadel (141) und die vierte Nadel (142) in der Kammer (1401) begrenzt sind, um zu verhindern, dass sich jede der dritten Nadel (141) und der vierten Nadel (142) aus der Kammer (1401) löst;
wobei die dritte Nadel (141) einen ersten Vorsprung (1411) umfasst, der aus der Kammer (1401) des zweiten Gehäuses (140) herausragt und in Kontakt mit der metallischen Kontaktstelle (D) steht; wobei die vierte Nadel (142) einen zweiten Vorsprung (1421) umfasst, der von der dritten Nadel (141) abweicht und von der Kammer (1401) zum Installationsabschnitt (1402) hin angeordnet ist und sich dann in den Installationsabschnitt (1402) erstreckt; und
ein zweites elastisches Element (143), das zwischen der dritten Nadel (141) und der vierten Nadel (142) angeordnet ist und so konfiguriert ist, dass es die dritte Nadel (141) und die vierte Nadel (142) so drückt, um sie zur Außenseite des zweiten Gehäuses (140) hin zu bewegen.

2. Temperaturerfassungssystem (A) nach Anspruch 1, wobei das Nadelsystem zur Temperaturerfassung (300) umfasst:
ein Bluetooth-Chipmodul (33), das elektrisch mit einer externen Stromversorgung und dem ersten Erfassungsmodul (121) verbunden ist und so konfiguriert ist, dass es die vom ersten Erfassungsmodul (121) übertragenen Erfassungsimpulse empfängt und die Anzahl der Erfassungsimpulse pro Zeiteinheit berechnet, wobei das Bluetooth-Chipmodul (33) umfasst:

ein zweites Erfassungsmodul (128), das so konfiguriert ist, dass es eine Umgebungstemperatur des zu messenden Objekts zu erfassen, um einen Zwischentemperaturwert zu erhalten;
einen einmal programmierbaren (OTP) Speicher (333), der so konfiguriert ist, dass er Softwareprogramme im Bluetooth-Chipmodul (33) speichert, und wobei das Bluetooth-Chipmodul (33) so konfiguriert ist, dass es durch Ausführen der Softwareprogramme einen endgültigen Temperaturwert abhängig von dem Zwischentemperaturwert und der Anzahl der Erfassungsimpulse pro Zeiteinheit bestimmt;
ein Bluetooth-Ausgabemodul (331), das so konfiguriert ist, dass es den erfassten endgültigen Temperaturwert in Bluetooth-Radiofrequenzsignale (RF) umwandelt und dann die Bluetooth-Radiofrequenzsignale ausgibt; und wobei der endgültige Temperaturwert erhalten wird,
indem ein erster Temperaturwert durch Formel (1-1) abhängig von der Anzahl der Erfassungsimpulse pro Zeiteinheit, die von einem Impulstemperatursensor gesendet werden;

$$Temp = Num * 0{,}0625°C - 50{,}0625°C; \quad (1\text{-}1)$$

wobei Num für die Anzahl der Erfassungsimpulse steht und Temp für den ersten Temperaturwert steht; und indem der erste Temperaturwert mit dem Zwischentemperaturwert verglichen wird, um aus dem ersten Temperaturwert und dem Zwischentemperaturwert einen größeren Wert als endgültigen Temperaturwert zu nehmen.

3.  Temperaturerfassungssystem (A) nach Anspruch 2, wobei das Bluetooth-Ausgabemodul (331) umfasst:

  ein Radiofrequenzmodul (124), das so konfiguriert ist, dass es abhängig von dem endgültigen Temperaturwert ein Temperaturwertsignal überträgt, das einem Bluetooth-Kommunikationsprotokoll entspricht;
  eine Hochfrequenzantenne (HF-Antenne) (15); und
  eine Radiofrequenz-Anpassungsschaltung (3312), die elektrisch zwischen dem RF-Modul (124) und der HF-Antenne (15) angeschlossen ist und so konfiguriert ist, dass sie eine Aufwärtskonvertierung des Temperaturwertsignals des RF-Moduls (124) durchführt und dann das aufwärtskonvertierte Temperaturwertsignal an die HF-Antenne (15) sendet; wobei die HF-Antenne (15) so konfiguriert ist, dass sie das von der RF-Anpassungsschaltung (3312) übertragene Temperaturwertsignal in ein Bluetooth-Radiofrequenzsignal mit guter Stabilität und Richtwirkung umwandelt und dann das Bluetooth-Radiofrequenzsignal in Funkform aussendet.

4.  Temperaturerfassungssystem (A) nach Anspruch 3, wobei der endgültige Temperaturwert durch folgenden Korrekturprozess berechnet wird:

  Berechnen eines zweiten Temperaturwerts durch Formel (2-1) abhängig von der Anzahl der Erfassungsimpulse pro Zeiteinheit, die vom Impulstemperatursensor gesendet werden;

$$T = Temp + (Temp - 30) * 0{,}005, \quad Temp < 30°C;$$

$$T = Temp, \quad 30°C \leq Temp < 100°C;$$

$$T = Temp + (100 - Temp) * 0{,}012, \quad 100°C \leq Temp < 150°C; \quad (2\text{-}1)$$

  wobei T für den zweiten Temperaturwert steht und Temp für den ersten Temperaturwert steht; und Vergleichen des zweiten Temperaturwerts mit dem Zwischentemperaturwert, um aus dem zweiten Temperaturwert und dem Zwischentemperaturwert einen größeren Wert als endgültigen Temperaturwert zu nehmen.

5.  Temperaturerfassungssystem (A) nach Anspruch 2, wobei das Nadelsystem zur Temperaturerfassung (300) ferner so konfiguriert ist, dass es elektrisch mit einem intelligenten Terminal (400) verbunden ist, wobei das intelligente Terminal (400) so konfiguriert ist, dass es mit dem Bluetooth-Chipmodul (33) kommuniziert, um den vom Bluetooth-Chipmodul (33) erfassten endgültigen Temperaturwert zu empfangen.

6.  Temperaturerfassungssystem (A) nach Anspruch 5, wobei das Nadelsystem zur Temperaturerfassung (300) ferner so konfiguriert ist, dass es elektrisch mit einem Relais-Terminal (500) verbunden ist, das so konfiguriert ist, dass es den vom Bluetooth-Chipmodul (33) erfassten endgültigen Temperaturwert empfängt, den endgültigen Temperaturwert in ein Bluetooth-Signal oder ein WiFi-Signal umwandelt und dann das Bluetooth-Signal oder das WiFi-Signal an das intelligente Terminal (400) sendet.

7.  Temperaturerfassungssystem (A) nach Anspruch 6, wobei das Relais-Terminal (500), mit dem das Nadelsystem zur Temperaturerfassung (300) elektrisch verbunden ist, ferner umfasst:

  ein Bluetooth-Empfangsmodul (51), das so konfiguriert ist, dass es das dem endgültigen Temperaturwert, der vom Bluetooth-Chipmodul (33) erfasst wurde, entsprechende Bluetooth-Signal empfängt und dann das Bluetooth-Signal weiterleitet;

ein Relais-Bluetooth-Modul (52), das in Kommunikationsverbindung mit dem Bluetooth-Empfangsmodul (51) steht und so konfiguriert ist, dass es das vom Bluetooth-Empfangsmodul (51) gesendete Bluetooth-Signal empfängt und dann das Bluetooth-Signal in ein verstärktes Bluetooth-Signal umwandelt, um das verstärkte Bluetooth-Signal auszusenden;

ein WiFi-Modul (53), das in Kommunikationsverbindung mit dem Bluetooth-Empfangsmodul (51) steht und so konfiguriert ist, dass es das vom Bluetooth-Empfangsmodul (51) gesendete Bluetooth-Signal empfängt und dann das Bluetooth-Signal in ein verstärktes WiFi-Signal umwandelt, um das verstärkte WiFi-Signal auszusenden; und

ein Verteilungsnetzwerkmodul (54), das in Kommunikationsverbindung mit dem Relais-Bluetooth-Modul (52) und dem WiFi-Modul (53) steht und so konfiguriert ist, dass es abhängig von den Softwareprogrammen oder einem manuellen Auslösemodus bestimmt, dass ein vom Relais-Terminal (500) gesendetes Signal das vom Relais-Bluetooth-Modul (52) gesendete verstärkte Bluetooth-Signal oder das vom WiFi-Modul (53) gesendete verstärkte WiFi-Signal ist, um eine Kommunikation zwischen dem Relais-Terminal (500) und dem intelligenten Terminal (400) zu erhalten.

8.  Temperaturerfassungssystem (A) nach Anspruch 1, wobei die Steuerleiterplatte (12) einen Installationsschlitz (126), der an einem Abschnitt des Schwanzendes (120) ausgebildet ist und mit dem Installationsabschnitt (1402) befestigt ist, und einen blanken ersten Metallpunkt (1261) umfasst, der auf dem Installationsschlitz (126) angeordnet ist und in Kontakt mit dem zweiten Vorsprung steht (1421) und ferner mit der koaxialen Signalleitung (123) verbunden ist.

9.  Temperaturerfassungssystem (A) nach Anspruch 8, wobei die Größe des Installationsabschnitts (1402) kleiner als die der Kammer (1401) ist, wobei eine ringförmige Abschrägung (144) zwischen der Kammer (1401) und dem Installationsabschnitt (1402) angeordnet ist und so konfiguriert ist, dass sie verhindert, dass sich die vierte Nadel (142) vom zweiten Gehäuse (140) wegbewegt.

10. Temperaturerfassungssystem (A) nach Anspruch 9, wobei ein zweiter Metallpunkt (127) auf einer Seite der Steuerleiterplatte (12) zur Wärmeübertragung angeordnet ist, wobei nach der Installation der Steuerleiterplatte (12) am Einführende (110) der zweite Metallpunkt (127) in Kontakt mit dem Einführende (110) steht; wobei das erste Erfassungsmodul (121) so konfiguriert ist, dass es die Temperatur des zweiten Metallpunkts (127) und der ersten Hülse (13) erfasst; wobei ein zweites Erfassungsmodul (128) auf der Steuerleiterplatte (12) angeordnet ist und so konfiguriert ist, dass es eine Umgebungstemperatur um die Steuerleiterplatte (12) herum erfasst.

**Revendications**

1.  Système de détection de température (A), comprenant :

une aiguille de détection de température (100) en forme de bande longue et une extrémité configurée pour être insérée dans un objet à mesurer afin de détecter une température de l'objet à mesurer ;

un système d'aiguille de détection de température (300) reçu dans l'aiguille de détection de température (100);

l'aiguille de détection de température (100) comprenant :

un corps principal (11) ayant une configuration en forme de bande longue et comprenant une extrémité d'insertion creuse (110) configurée pour être insérée dans l'objet à mesurer afin de détecter la température de l'objet à mesurer, et une extrémité de queue (120) configurée pour être exposée à l'extérieur de l'objet à mesurer et isolée de l'extrémité d'insertion (110),

l'extrémité d'insertion (110) en métal, l'extrémité de queue (120) en céramique ou en matériau polyéther-éther-cétone (PEEK) et un point de contact métallique (D) formé à une extrémité de l'extrémité de queue (120) ;

un tableau de commande de circuits (12) reçu dans le corps principal de manière suspendue à travers un élément élastique métallique (10) pour réduire une influence thermique exercée sur le tableau de commande de circuits (12), et deux extrémités du tableau de commande de circuits (12) disposées respectivement proche de l'extrémité d'insertion (110) et de l'extrémité de queue (120) ;

le système d'aiguille de détection de température (300) étant disposé sur le tableau de commande de circuits (12), et configuré pour détecter des températures d'au moins deux parties différentes de l'aiguille de détection de température (100) et traiter des résultats de détection pour obtenir une valeur de température finale ; et

l'élément élastique métallique (10) comprenant :

une première canule (13) ayant une structure métallique, qui est installée sur un côté du tableau de commande de circuits (12) proche de l'extrémité d'insertion (110) et en contact avec une paroi interne de l'extrémité d'insertion (110) pour fixer le tableau de commande de circuits (12) à l'intérieur de l'extrémité d'insertion (110) ;

une deuxième canule (14) ayant une structure métallique, qui est installée sur le tableau de commande de circuits (12) en regard de l'extrémité de queue (120), et en contact avec le point de contact métallique (D) ; et dans lequel,

un premier module de détection (121) est configuré pour détecter une température de l'objet à mesurer en insérant dans l'objet à mesurer et envoyer des impulsions de détection, le premier module de détection (121) étant disposé sur le tableau de commande de circuits (12) et proche du premier canule (13) pour détecter une température du premier canule (13) ; et un module de gestion d'alimentation (122) est configuré pour alimenter le système d'aiguille de détection de température (300), le module de gestion d'alimentation (122) étant disposé sur le tableau de commande de circuits (12) et connecté électriquement à la première canule (13) et à la deuxième canule (14), de sorte que le module de gestion d'alimentation (122) soit rechargé en prenant à la fois la première canule (13) et la deuxième canule (14) comme bornes de recharge ;

et dans lequel,

le tableau de commande de circuits (12) comprend un fil de signal coaxial (123) et un module de radiofréquence (RF) (124), une extrémité du fil de signal coaxial (123) étant en contact avec la deuxième canule (14) et l'autre extrémité du fil de signal coaxial (123) étant connectée à la fois au module RF (124) et au module de gestion d'alimentation (122) ; et dans lequel,

le fil de signal coaxial (123) est connecté électriquement au module RF (124) et au module de gestion d'alimentation (122) par une bille magnétique isolante (125) ; le module RF (124) est configuré pour transmettre un signal sans fil à l'extérieur de l'aiguille de détection de température (100) à travers le fil de signal coaxial (123), la deuxième canule (14) et le point de contact métallique (D) ; l'extrémité de queue (120) est réalisée en céramique ou en PEEK et configurée pour réduire la chaleur transmise par l'extrémité d'insertion métallique (110), et la deuxième canule (14) est configurée pour réduire la chaleur transmise par le point de contact métallique (D), de sorte que le fil de signal coaxial (123) et le module RF (124) ne soient influencés par la température, envoyant ainsi des signaux stables sans fil ; et dans lequel,

la première canule (13) comprend :

un premier logement (130) pourvu d'une cavité interne (1301) ;

une première aiguille (131) et une deuxième aiguille (132) à l'opposé l'une de l'autre et installées dans la cavité interne (1301), de sorte que la première aiguille (131) et la deuxième aiguille (132) soient limitées dans la cavité interne (1301) pour empêcher chacune de la première aiguille (131) et de la deuxième aiguille (132) de se séparer de la cavité interne (1301) ;

un premier élément élastique (133) disposé entre la première aiguille (131) et la deuxième aiguille (132), et configuré pour pousser la première aiguille (131) et la deuxième aiguille (132) vers l'extérieur du premier logement (130) ;

le premier logement (130) passant à travers le tableau de commande de circuits (12) pour être fixé, la première aiguille (131) et la deuxième aiguille (132) étant en contact avec la paroi interne de l'extrémité d'insertion (110) pour fixer le tableau de commande de circuits (12), de sorte que le tableau de commande de circuits (12) soit situé au centre interne de l'extrémité d'insertion (110) ; et dans lequel,

la première canule (13) est configurée pour transmettre la chaleur à l'extrémité d'insertion (110) de sorte que le premier module de détection (121) détecte la température de l'extrémité d'insertion (110) ; et dans lequel,

la deuxième canule (14) comprend :

un deuxième logement (140) comprenant une chambre (1401) disposée dans le deuxième logement (140), et une portion d'installation (1402) reliée à la chambre (1401) ;

une troisième aiguille (141) et une quatrième aiguille (142) à l'opposé l'une de l'autre et installées dans la chambre (1401), de sorte que la troisième aiguille (141) et la quatrième aiguille (142) soient limitées dans la chambre (1401) pour empêcher chacune la troisième aiguille (141) et la quatrième aiguille (142) de se séparer de la chambre (1401) ;

la troisième aiguille (141) comprenant une première saillie (1411) s'étendant hors du deuxième logement (140) de la chambre (1401), et étant en contact avec le point de contact métallique (D) ; la quatrième aiguille (142) comprenant une deuxième saillie (1421) s'écartant de la troisième aiguille (141) et étant disposée de la chambre (1401) vers la portion d'installation (1402), puis s'étendant dans la portion d'installation (1402) ;

un deuxième élément élastique (143) disposé entre la troisième aiguille (141) et la quatrième aiguille (142), et configuré pour pousser la troisième aiguille (141) et la quatrième aiguille (142) vers l'extérieur du deuxième logement (140).

2. Système de détection de température (A) selon la revendication 1, dans lequel le système d'aiguille de détection de température (300) comprend :

un module de puce Bluetooth (33) connecté électriquement à une alimentation extérieure et au premier module de détection (121), et configuré pour recevoir les impulsions de détection transmises par le premier module de détection (121) et calculer un nombre d'impulsions de détection par unité de temps, le module de puce Bluetooth (33) comprenant :

un deuxième module de détection (128) configuré pour détecter une température ambiante de l'objet à mesurer afin d'obtenir une valeur de température intermédiaire ;
une mémoire programmable unique (OTP) (333) configurée pour stocker des programmes informatiques dans le module de puce Bluetooth (33), et le module de puce Bluetooth (33) étant configuré pour déterminer une valeur de température finale en fonction de la valeur de température intermédiaire et du nombre d'impulsions de détection par unité de temps en exécutant les programmes informatiques ;
un module d'envoie Bluetooth (331) configuré pour convertir la valeur de température finale détectée en signaux de radiofréquence Bluetooth, puis envoyer les signaux de radiofréquence Bluetooth ; et dans lequel la valeur de température finale est obtenue comme suit :

calculer une première valeur de température par la formule (1-1) en fonction du nombre d'impulsions de détection par unité de temps envoyées par un capteur de température par impulsion ;

$$\text{Temp}=\text{Num}*0{,}0625°C-50{,}0625°C ; (1\text{-}1)$$

où Num représente le nombre d'impulsions de détection, et Temp représente la première valeur de température ; et
comparer la première valeur de température avec la valeur de température intermédiaire, et prendre une valeur plus grande de la première valeur de température et la valeur de température intermédiaire comme valeur de température finale.

3. Système de détection de température (A) selon la revendication 2, dans lequel le module d'envoie Bluetooth (331) comprend :

un module de radiofréquence (124) configuré pour transmettre un signal de valeur de température conforme à un protocole de communication Bluetooth en fonction de la valeur de température finale ;
une antenne à haute fréquence (HF) (15) ; et
un circuit d'adaptation de radiofréquences (3312) connecté électriquement entre le module RF (124) et l'antenne HF (15) et configuré pour effectuer une conversion ascendante sur le signal de valeur de température du module RF (124), puis envoyer le signal de valeur de température soumise à la conversion ascendante à l'antenne HF (15) ; l'antenne HF (15) étant configurée pour convertir le signal de valeur de température transmis par le circuit d'adaptation de radiofréquences (3312) en signal de radiofréquence Bluetooth avec une bonne stabilité et directivité, puis envoyer le signal de radiofréquence Bluetooth sous forme radio.

4. Système de détection de température (A) selon la revendication 3, dans lequel la valeur de température finale est calculée par le procédé de correction suivant :

calculer une deuxième valeur de température par la formule (2-1) à partir du nombre d'impulsions de détection par unité de temps envoyées par le capteur de température par impulsion ;

$$T=Temp+(Temp-30)*0,005, \text{ où } Temp < 30°C \text{ ;}$$

$$T=Temp, \text{ où } 30°C \leq Temp < 100°C \text{ ;}$$

$$T=Temp +(100-Temp)*0,012, \text{ où } 100°C \leq Temp < 150°C \text{ ; } (2-1)$$

où T représente la deuxième valeur de température, et Temp représente la première valeur de température ; et comparer la deuxième valeur de température avec la valeur de température intermédiaire, et prendre une valeur plus grande de la deuxième valeur de température et la valeur de température intermédiaire comme valeur de température finale.

5. Système de détection de température (A) selon la revendication 2, dans lequel le système d'aiguille de détection de température (300) est configuré en outre pour être connecté électriquement à un terminal intelligent (400), le terminal intelligent (400) étant configuré pour communiquer avec le module de puce Bluetooth (33) afin de recevoir la valeur de température finale détectée par le module de puce Bluetooth (33).

6. Système de détection de température (A) selon la revendication 5, dans lequel le système d'aiguille de détection de température (300) est configuré en outre pour être connecté électriquement à un terminal relais (500) qui est configuré pour recevoir la valeur de température finale détectée par le module de puce Bluetooth (33), convertir la valeur de température finale en signal Bluetooth ou en signal WiFi, puis envoyer le signal Bluetooth ou le signal WiFi au terminal intelligent (400).

7. Système de détection de température (A) selon la revendication 6, dans lequel le terminal relais (500) auquel le système d'aiguille de détection de température (300) est configuré pour être connecté électriquement comprend en outre :

un module de réception Bluetooth (51) configuré pour recevoir le signal Bluetooth correspondant à la valeur de température finale détectée par le module de puce Bluetooth (33), et puis transmettre le signal Bluetooth ;
un module Bluetooth relais (52) en connexion de communication avec le module de réception Bluetooth (51) et configuré pour recevoir le signal Bluetooth envoyé par le module de réception Bluetooth (51), et puis convertir le signal Bluetooth en signal Bluetooth renforcé pour envoyer le signal Bluetooth renforcé ;
un module WiFi (53) en connexion de communication avec le module de réception Bluetooth (51) et configuré pour recevoir le signal Bluetooth envoyé par le module de réception Bluetooth (51), et puis convertir le signal Bluetooth en signal WiFi renforcé pour envoyer le signal WiFi renforcé ;
un module de réseau de distribution (54) en connexion de communication avec le module Bluetooth relais (52) et le module WiFi (53), et configuré pour déterminer qu'un signal envoyé par le terminal relais (500) est le signal Bluetooth renforcé envoyé par le module Bluetooth relais (52) ou le signal WiFi renforcé envoyé par le module WiFi (53), en fonction des programmes informatiques ou un mode de déclenchement manuel, afin d'obtenir une communication entre le terminal relais (500) et le terminal intelligent (400).

8. Système de détection de température (A) selon la revendication 1, dans lequel le tableau de commande de circuits (12) comprend une rainure d'installation (126) formée sur une partie de l'extrémité de queue (120) et fixée avec la portion d'installation (1402), et une première pointe métallique nue (1261) est disposée sur la rainure d'installation (126) et en contact avec la deuxième saillie (1421), et connectée en outre au fil de signal coaxial (123).

9. Système de détection de température (A) selon la revendication 8, dans lequel une taille de la portion d'installation (1402) est inférieure à celle de la chambre (1401), et un biseau annulaire (144) est disposé entre la chambre (1401) et la portion d'installation (1402) et configuré pour empêcher la quatrième aiguille (142) de se séparer du deuxième logement (140).

10. Système de détection de température (A) selon la revendication 9, dans lequel une deuxième pointe métallique (127) est disposée sur un côté du tableau de commande de circuits (12) pour la transmission thermique, une fois le tableau de commande de circuits (12) installé à l'extrémité d'insertion (110), la deuxième pointe métallique (127) vient en contact avec l'extrémité d'insertion (110) ; le premier module de détection (121) est configuré pour détecter la température du deuxième pointe métallique (127) et de la première canule (13) ; et un deuxième module (128) de détection est disposé sur le tableau de commande de circuits (12) et configuré pour détecter une température ambiante autour du tableau de commande de circuits (12).

A

FIG. 1

100

FIG. 2

FIG. 3

FIG. 4

FIG. 5

FIG. 6

13

131

130

1301

133

132

FIG. 7

FIG. 8

FIG. 9

FIG. 10

300

331

122

power management
circuit

Bluetooth output
module

Second detection
module

33

128

Bluetooth chip module

121

First detection
module

FIG. 11

331

HF anntenna

15

RF matching circuit

3312

RF module

124

FIG. 12

FIG. 13

FIG. 14

FIG. 15

FIG. 16

FIG. 17

FIG. 18

FIG.19

FIG.20

EP 4 102 197 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012224604 A1
- US 2018340842 A1